(19) Europäisches Patentamt
European Patent Office
Office européen des brevets

(11) **EP 4 586 517 A1**

(12) **EUROPEAN PATENT APPLICATION**
published in accordance with Art. 153(4) EPC

(43) Date of publication:
**16.07.2025 Bulletin 2025/29**

(21) Application number: 23877643.9

(22) Date of filing: **11.10.2023**

(51) International Patent Classification (IPC):
*H04B 7/06* (2006.01)   *H04W 72/04* (2023.01)
*H04L 5/00* (2006.01)

(52) Cooperative Patent Classification (CPC):
H04B 7/06; H04L 5/00; H04W 72/04

(86) International application number:
**PCT/KR2023/015569**

(87) International publication number:
**WO 2024/080716 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.10.2022  KR 20220129849
10.10.2023  KR 20230134419**

(71) Applicant: Samsung Electronics Co., Ltd.
**Suwon-si, Gyeonggi-do 16677 (KR)**

(72) Inventors:
• **JANG, Youngrok**
  **Suwon-si, Gyeonggi-do 16677 (KR)**
• **JI, Hyoungju**
  **Suwon-si, Gyeonggi-do 16677 (KR)**
• **KIM, Younsun**
  **Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR REPORTING CHANNEL STATE INFORMATION IN WIRELESS COMMUNICATION SYSTEM**

(57)    The present disclosure relates to a 5G or 6G communication system for supporting higher data transmission rates. A method performed by a terminal in a communication system according to an embodiment of the present disclosure includes the steps of: receiving, from a base station, a bitmap for indicating a subband for channel state information (CSI) reporting; generating CSI on the basis of one or more subbands for the CSI reporting identified on the basis of the bitmap; and transmitting the CSI to the base station, wherein the one or more subbands are identified by using a first method or a second method for identifying the one or more subbands by interpreting the bitmap.

FIG. 13A

Start

Transmit UE capability — 1301

Receive higher layer signaling — 1302

Receive reference signal — 1303

Generate subband channel state information — 1304

Report subband channel state information — 1305

End

**Description**

[Technical Field]

The disclosure relates to a method and a device for reporting channel state information in a wireless communication system.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-highperformance communication and computing resources.

With the advance of wireless communication systems as described above, various services can be provided, and accordingly there is a need for ways to smoothly provide these services.

[Disclosure]

[Technical Problem]

Embodiments set forth herein are to provide a method and a device for channel state information reporting in a wireless communication system. In particular, provided is a method and a device in which a base station and a terminal efficiently generate, interpret, and transmit/receive configuration information of a subband for which channel state information is to be reported.

[Technical Solution]

In order to solve the problem described above, the disclosure provides a method performed by a terminal in a communication system, the method including receiving, from a base station, a bitmap indicating a subband for channel state information (CSI) reporting, generating CSI, based on one or more subbands for the CSI reporting identified based on the bitmap, and transmitting the CSI to the base station, wherein the one or more subbands are identified by using a first method or a second method for identifying the one or more subbands by interpreting the bitmap.

In addition, the disclosure provides a method performed by a base station in a communication system, the method including transmitting, to a terminal, a bitmap indicating a subband for channel state information (CSI) reporting, and receiving CSI from the terminal, wherein the CSI is based on one or more subbands for the CSI reporting indicated by the bitmap, and the one or more subbands are identified by using a first method or a second method for identifying the one or more subbands by interpreting the bitmap.

Furthermore, the disclosure provides a terminal in a communication system, the terminal including a transceiver, and a controller configured to perform control to receive, from a base station, a bitmap indicating a subband for channel state information (CSI) reporting, generate CSI, based on one or more subbands for the CSI reporting identified based on the bitmap, and transmit the CSI to the base station, wherein the one or more subbands are identified by using a first method or a second method for identifying the one or more subbands by interpreting the bitmap.

Still furthermore, the disclosure provides a base station in a communication system, the base station including a transceiver, and a controller configured to perform control to transmit, to a terminal, a bitmap indicating a subband for channel state information (CSI) reporting, and receive CSI from the terminal, wherein the CSI is based on one or more subbands for the CSI reporting indicated by the bitmap, and the one or more subbands are identified by using a first method or a second method for identifying the one or more subbands by interpreting the bitmap.

[Advantageous Effects]

According to a disclosed embodiment, a communication method and device capable of effectively reporting channel state information in a wireless communication system can be provided.

[Description of Drawings]

FIG. 1 illustrates an example of a basic structure of a time-frequency domain in a 5G communication system.
FIG. 2 illustrates an example of a slot structure used in a 5G communication system.
FIG. 3 illustrates an example of a bandwidth part (BWP) configuration in a 5G communication system.
FIG. 4 illustrates an example of a control resource set used to transmit a downlink control channel in a 5G communication system.
FIG. 5 illustrates an example of a structure of a downlink control channel in a 5G communication system.
FIG. 6 illustrates an example of an aperiodic CSI reporting method.
FIG. 7 illustrates an example of a method of allocating a subband index when reporting subband channel state information according to the disclosure.
FIG. 8 illustrates an example of a method capable of deriving the same operation in different subband channel state information reporting methods according to the disclosure.
FIG. 9 illustrates an example of another method capable of deriving the same operation in different subband channel state information reporting methods according to the disclosure.

FIG. 10 illustrates an example of yet another method capable of deriving the same operation in different subband channel state information reporting methods according to the disclosure.

FIG. 11 illustrates an example of still another method capable of deriving the same operation in different subband channel state information reporting methods according to the disclosure.

FIG. 12 illustrates an example of still yet another method capable of deriving the same operation in different subband channel state information reporting methods according to the disclosure.

FIG. 13A illustrates an example of an operation performed by a UE according to an embodiment of the disclosure.

FIG. 13B illustrates an example of an operation performed by a base station according to an embodiment of the disclosure.

FIG. 14 is a block diagram illustrating a structure of a UE according to an embodiment of the disclosure.

FIG. 15 is a block diagram illustrating a structure of a base station according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased userperceived data rate to the LTE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

Hereinafter, a frame structure of a 5G system will be described in more detail with reference to the accompanying drawings.

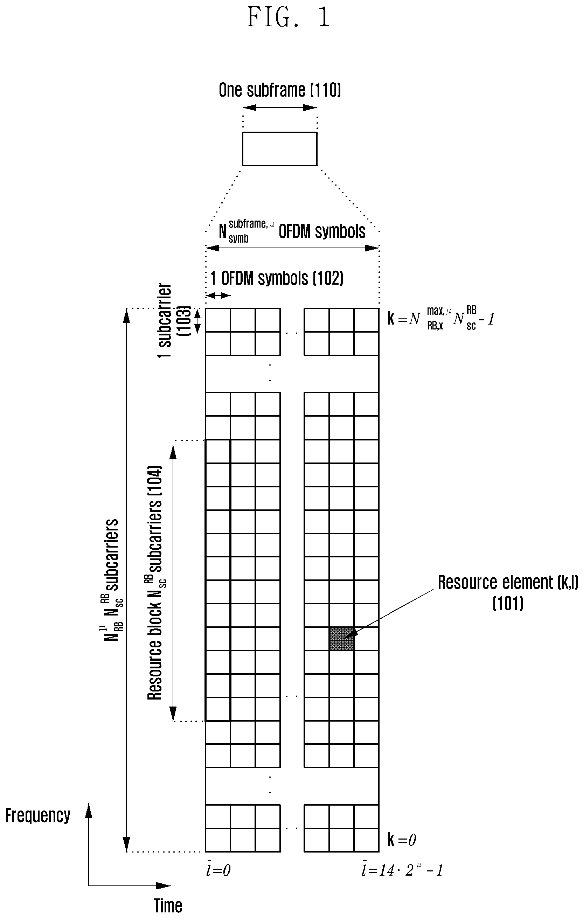

FIG. 1 illustrates an example of a basic structure of a time-frequency domain in a 5G communication system.

Referring to FIG. 1, the horizontal axis represents a time domain, and the vertical axis represents a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

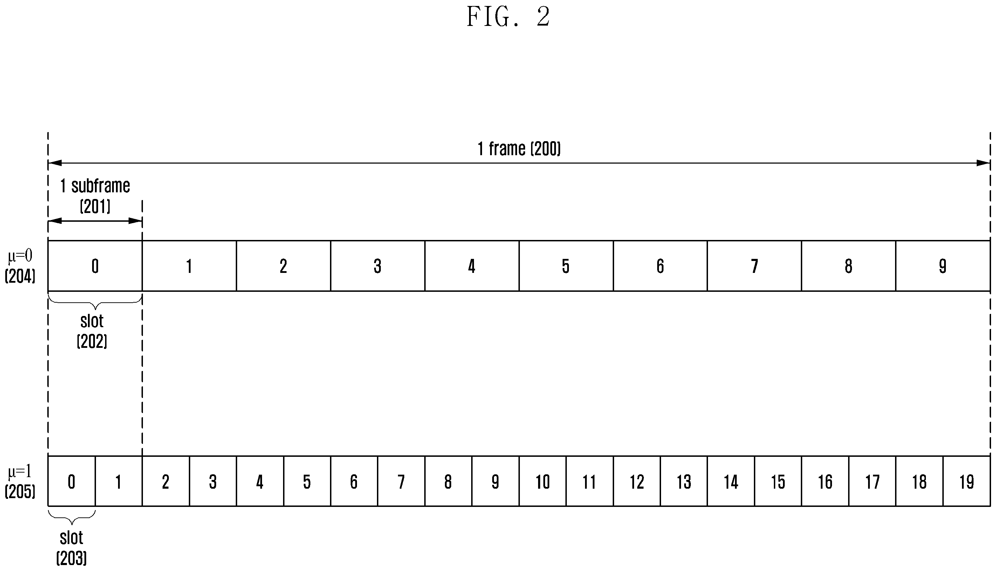

FIG. 2 illustrates an example of a slot structure used in a 5G communication system.

Referring to FIG. 2, an example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example of FIG. 2 shows the case of $\mu$=0 (2-04) and the case of $\mu$=1 (2-05) as a configuration value for a subcarrier spacing. In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, bandwidth part (BWP) configuration in a 5G communication system will be described in detail with reference to the accompanying drawings.

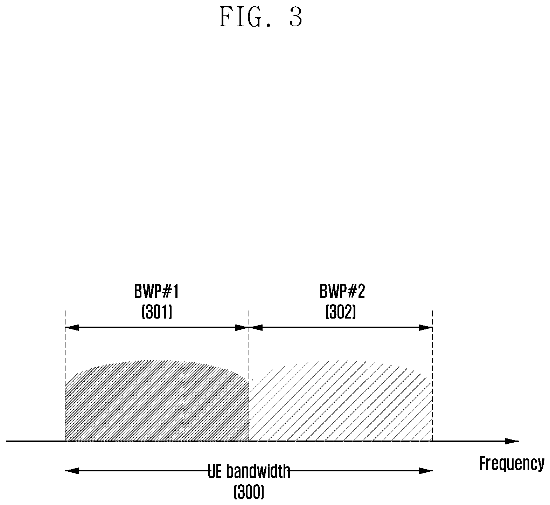

FIG. 3 illustrates an example of a BWP configuration in a 5G communication system.

Referring to FIG. 3, FIG. 3 illustrates an example in which a UE bandwidth 300 is configured to include two bandwidth parts, that is, BWP#1 301 and BWP#2 302. A base station may configure one or multiple bandwidth parts for a UE, and may configure the following pieces of information with regard to each BWP as given in Table 2 below.

[Table 2]

```
BWP ::=                    SEQUENCE {
    bwp-Id                     BWP-Id,
    (bandwidth part identifier)
    locationAndBandwidth       INTEGER (1..65536),
    (bandwidth part location)
    subcarrierSpacing          ENUMERATED {n0, n1, n2, n3, n4, n5},
    (subcarrier spacing)
    cyclicPrefix               ENUMERATED { extended }
    (cyclic prefix)
}
```

Of course, the BWP configuration is not limited to the above example, and in addition to the above configuration information, various parameters related to the BWP may be configured for the UE. The base station may transmit the configuration information to the UE through upper layer signaling, for example, radio resource control (RRC) signaling. One configured BWP or at least one of multiple configured BWPs may be activated. Whether or not the configured BWP is activated may be transferred from the base station to the UE semi-statically through RRC signaling, or dynamically through downlink control information (DCI).

According to an embodiment, before an RRC connection, an initial BWP for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered to correspond to identity (ID) 0.

The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial BWP for initial access. In this case, the identity (ID) of the initial BWP may be regarded as 0.

The UE may receive, through the configured initial BWP, a physical downlink shared channel (PDSCH) through which an SIB is transmitted. The initial BWP may be used not only for the purpose of receiving the SIB, but also for other system information (OSI), paging, random access, or the like.

The BWP-related configuration supported by the 5G system may be used for various purposes.

According to an embodiment, if the bandwidth supported by the UE is smaller than the system bandwidth, this may be supported through the BWP configuration. For example, the base station may configure the frequency location of the BWP for the UE, so that the UE can transmit/receive data at a specific frequency location within the system bandwidth.

In addition, according to an embodiment, the base station may configure multiple BWPs for the UE for the purpose of supporting different numerologies. For example, in order to support a UE's data transmission/reception using both a subcarrier spacing of 15kHz and a subcarrier spacing of 30kHz, two BWPs may be configured as subcarrier spacings of 15kHz and 30kHz, respectively. Different BWPs may be subjected to frequency division multiplexing (FDM), and if data is to be transmitted/received at a specific subcarrier spacing, the BWP configured as the corresponding subcarrier spacing may be activated.

In addition, according to an embodiment, the base station may configure BWPs having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a BWP of a relatively small bandwidth (for example, a BWP of 20MHz) for the UE. The UE may perform a monitoring operation in the 20MHz bandwidth part in the absence of traffic, and may transmit/receive data with the 100MHz BWP as instructed by the base station if data has occurred.

If one or more BWPs are configured for the UE, the base station may indicate, to the UE, to change the BWPs by using a BWP indicator field within DCI. As an example, if the currently activated BWP of the UE is BWP#1 301 in FIG. 3, the base station may indicate BWP#2 302 with a BWP indicator within DCI, and the UE may change the BWP to BWP#2 302 indicated by the BWP indicator inside received DCI.

Next, synchronization signal/physical broadcast channel (SS/PBCH) blocks in a 5G wireless communication system will be described.

An SS/PBCH block may refer to a physical layer channel block including a primary synchronization signal (PSS), a secondary synchronization signal (SSS), and a PBCH. Details thereof may be as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and from this, control resource set #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0.

The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a 5G system, scheduling information regarding uplink data (or PUSCH) or downlink data (or PDSCH) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI), modulation coding scheme C-RNTI (MCS-C-RNTI), or configured scheduling RNTI (CS-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 3]

- Identifier for DCI formats - 1 bit
    - The value of this bit field is always set to 0, indicating an UL DCI format

- Frequency domain resource assignment - $\left\lceil \log_2(N_{RB}^{UL,BWP}(N_{RB}^{UL,BWP}+1)/2) \right\rceil$

bits where $N_{RB}^{UL,BWP}$ is defined in subclause 7.3.1.0
    - For PUSCH hopping with resource allocation type 1:
        - $N_{UL\_hop}$ MSB bits are used to indicate the frequency offset according to Subclause 6.3 of [6, TS 38.214], where $N_{UL\_hop}$ = 1 if the higher layer parameter *frequencyHoppingOffsetLists* contains two offset values and $N_{UL\_hop}$ = 2 if the higher layer parameter *frequencyHoppingOffsetLists* contains four offset values

        - $\left\lceil \log_2(N_{RB}^{UL,BWP}(N_{RB}^{UL,BWP}+1)/2) \right\rceil - N_{UL\_hop}$ bits provides the frequency domain resource allocation according to Subclause 6.1.2.2.2 of [6, TS 38.214]
    - For non-PUSCH hopping with resource allocation type 1:

        - $\left\lceil \log_2(N_{RB}^{UL,BWP}(N_{RB}^{UL,BWP}+1)/2) \right\rceil$ bits provides the frequency domain resource allocation according to Subclause 6.1.2.2.2 of [6, TS 38.214]
- Time domain resource assignment - 4 bits as defined in Subclause 6.1.2.1 of [6, TS 38.214]
- Frequency hopping flag - 1 bit according to Table 7.3.1.1.1-3, as defined in Subclause 6.3 of [6, TS 38.214]
- Modulation and coding scheme - 5 bits as defined in Subclause 6.1.4.1 of [6, TS 38.214]
- New data indicator - 1 bit
- Redundancy version - 2 bits as defined in Table 7.3.1.1.1-2
- HARQ process number - 4 bits
- TPC command for scheduled PUSCH 2 bits as defined in Subclause 7.1.1 of [5, TS 38.213]
- Padding bits, if required.
- UL/SUL indicator (Supplementary UL indicator ) - 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).
    - If the UL/SUL indicator is present in DCI format 0_0 and the higher layer parameter *pusch-Config* is not configured on both UL and SUL the UE ignores the UL/SUL indicator field in
        DCI format 0_0, and the corresponding PUSCH scheduled by the DCI format 0_0 is for the UL or SUL for which high layer parameter *pucch-Config* is configured;
        - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.
        - If the UL/SUL indicator is not present in DCI format 0_0 and *pucch-Config* is not configured, the corresponding PUSCH scheduled by the DCI format 0_0 is for the uplink on which the latest PRACH is transmitted.

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

[Table 4]

- Identifier for DCI formats - 1 bit
    - The value of this bit field is always set to 0, indicating an UL DCI format
- Carrier indicator - 0 or 3 bits, as defined in Subclause 10.1 of [5, TS38.213].
- UL/SUL indicator (Supplementary UL indicator) - 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.

- Bandwidth part indicator - 0, 1 or 2 bits as determined by the number of UL BWPs $n_{BWP,RRC}$ configured by higher layers, excluding the initial UL bandwidth part. The bitwidth for this field is determined as $\left\lceil \log_2(n_{BWP}) \right\rceil$ bits, where

- $n_{BWP} = n_{BWP,RRC} + 1$ if $n_{BWP,RRC} \leq 3$, in which case the bandwidth part indicator is equivalent to the ascending order of the higher layer parameter *BWP-Id*;

- otherwise $n_{BWP} = n_{BWP,RRC}$, in which case the bandwidth part indicator is defined in Table 7.3.1.1.2-1;

If a UE does not support active BWP change via DCI, the UE ignores this bit field.

- Frequency domain resource assignment - number of bits determined by the following, where $N_{RB}^{UL,BWP}$ is the size of the active UL bandwidth part:

- $N_{RBG}$ bits if only resource allocation type 0 is configured, where $N_{RBG}$ is defined in Subclause 6.1.2.2.1 of [6, TS 38.214],

- $\left\lceil \log_2(N_{RB}^{UL,BWP}(N_{RB}^{UL,BWP} + 1)/2) \right\rceil$ bits if only resource allocation type 1 is configured, or

- $\max\left( \left\lceil \log_2(N_{RB}^{UL,BWP}(N_{RB}^{UL,BWP} + 1)/2) \right\rceil , N_{RBG} \right) + 1$ bits if both resource allocation type 0 and 1 are configured.

- If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

- For resource allocation type 0, the $N_{RBG}$ LSBs provide the resource allocation as defined in Subclause 6.1.2.2.1 of [6, TS 38.214].

- For resource allocation type 1, the $\left\lceil \log_2(N_{RB}^{UL,BWP}(N_{RB}^{UL,BWP} + 1)/2) \right\rceil$ LSBs provide the resource allocation as follows:

- For PUSCH hopping with resource allocation type 1:

- $N_{UL\_bop}$ MSB bits are used to indicate the frequency offset according to Subclause 6.3 of [6, TS 38.214], where $N_{UL\_hop} = 1$ if the higher layer parameter *frequencyHoppingOffsetLists* contains two offset values and $N_{UL\_hop} = 2$ if the higher layer parameter *frequencyHoppingOffsetLists* contains four offset values

- $\left\lceil \log_2(N_{RB}^{UL,BWP}(N_{RB}^{UL,BWP} + 1)/2) \right\rceil - N_{UL\_hop}$ bits provides the frequency domain resource allocation according to Subclause 6.1.2.2.2 of [6, TS 38.214]

- For non-PUSCH hopping with resource allocation type 1:

- $\left\lceil \log_2(N_{RB}^{UL,BWP}(N_{RB}^{UL,BWP} + 1)/2) \right\rceil$ bits provides the frequency domain resource allocation according to Subclause 6.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 6.1.2.1 of [6, TS38.214]. The bitwidth for this field is determined as $\left\lceil \log_2(I) \right\rceil$ bits, where *I* is the number of entries in the higher layer parameter *pusch-TimeDomainAllocationList* if the higher layer parameter is configured; otherwise *I* is the number of entries in the default table.

- Frequency hopping flag - 0 or 1 bit:

- 0 bit if only resource allocation type 0 is configured or if the higher layer parameter *frequencyHopping* is not configured;

(continued)

- 1 bit according to Table 7.3.1.1.1-3 otherwise, only applicable to resource allocation type 1, as defined in Subclause 6.3 of [6, TS 38.214].

- Modulation and coding scheme - 5 bits as defined in Subclause 6.1.4.1 of [6, TS 38.214]

- New data indicator - 1 bit

- Redundancy version - 2 bits as defined in Table 7.3.1.1.1-2

- HARQ process number - 4 bits

- $1^{st}$ downlink assignment index - 1 or 2 bits:

    - 1 bit for semi-static HARQ-ACK codebook;

    - 2 bits for dynamic HARQ-ACK codebook.

- $2^{nd}$ downlink assignment index - 0 or 2 bits:

    - 2 bits for dynamic HARQ-ACK codebook with two HARQ-ACK sub-codebooks;

    - 0 bit otherwise.

- TPC command for scheduled PUSCH - 2 bits as defined in Subclause 7.1.1 of [5, TS38.213]

- SRS resource indicator - $\left\lceil \log_2\left( \sum_{k=1}^{\min\{L_{max}, N_{SRS}\}} \binom{N_{SRS}}{k} \right) \right\rceil$ or $\left\lceil \log_2(N_{SRS}) \right\rceil$ bits, where $N_{SRS}$ is the number of configured SRS resources in the SRS resource set associated with the higher layer parameter *usage* of value *'codeBook' or 'nonCodeBook'*,

- $\left\lceil \log_2\left( \sum_{k=1}^{\min\{L_{max}, N_{SRS}\}} \binom{N_{SRS}}{k} \right) \right\rceil$ bits according to Tables 7.3.1.1.2-28/29/30/31 if the higher layer parameter *txConfig = nonCodebook,* where $N_{SRS}$ is the number of configured SRS resources in the SRS resource set associated with the higher layer parameter *usage* of value *'nonCodeBook'* and

    - if UE supports operation with *maxMIMO-Layers* and the higher layer parameter *maxMIMO-Layers of PUSCH-ServingCellConfig* of the serving cell is configured, $L_{max}$ is given by that parameter

    - otherwise, $L_{max}$ is given by the maximum number of layers for PUSCH supported by the UE for the serving cell for non-codebook based operation.

- $\left\lceil \log_2(N_{SRS}) \right\rceil$ bits according to Tables 7.3.1.1.2-32 if the higher layer parameter *txConfig = codebook,* where $N_{SRS}$ is the number of configured SRS resources in the SRS resource set associated with the higher layer parameter *usage* of value *'codeBook'*.

- Precoding information and number of layers - number of bits determined by the following:

    - 0 bits if the higher layer parameter *txConfig = nonCodeBook;*

    - 0 bits for 1 antenna port and if the higher layer parameter *txConfig = codebook;*

    - 4, 5, or 6 bits according to Table 7.3.1.1 2-2 for 4 antenna ports, if *txConfig = codebook,* and according to whether transform precoder is enabled or disabled, and the values of higher layer parameters *maxRank,* and *codebookSubset*;

    - 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset*;

    - 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset*;

    - 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.*

    - Antenna ports - number of bits determined by the following

        - 2 bits as defined by Tables 7.3.1.1.2-6, if transform precoder is enabled, *dmrs-Type=1,* and *max-Length=1;*

        - 4 bits as defined by Tables 7.3.1.1.2-7, if transform precoder is enabled, *dmrs-Type=1,* and *max-Length=2;*

(continued)

- 3 bits as defined by Tables 7.3.1.1.2-8/9/10/11, if transform precoder is disabled, *dmrs-Type*=1*, and maxLength*=1*,* and the value of rank is determined according to the SRS resource indicator field if the higher layer parameter *txConfig* = *nonCodebook* and according to the Precoding information and number of layers field if the higher layer parameter *txConfig* = *codebook,*

- 4 bits as defined by Tables 7.3.1.1.2-12/13/14/15, if transform precoder is disabled, *dmrs-Type*=1*, and maxLength*=2*,* and the value of rank is determined according to the SRS resource indicator field if the higher layer parameter *txConfig* = *nonCodebook* and according to the Precoding information and number of layers field if the higher layer parameter *txConfig* = *codebook;*

- 4 bits as defined by Tables 7.3.1.1.2-16/17/18/19, if transform precoder is disabled, *dmrs-Type*=2*, and maxLength*=1*,* and the value of rank is determined according to the SRS resource indicator field if the higher layer parameter *txConfig* = *nonCodebook* and according to the Precoding information and number of layers field if the higher layer parameter *txConfig* = *codebook;*

- 5 bits as defined by Tables 7.3.1.1.2-20/21/22/23, if transform precoder is disabled, *dmrs-Type*=2*, and maxLength*=2*,* and the value of rank is determined according to the SRS resource indicator field if the higher layer parameter *txConfig* = *nonCodebook* and according to the Precoding infoimation and number of layers field if the higher layer parameter *txConfig* = *codebook.*

where the number of CDM groups without data of values 1, 2, and 3 in Tables 7.3.1.1.2-6 to 7.3.1.1.2-23 refers to CDM groups {0}, {0,1}, and {0, 1,2} respectively.

If a UE is configured with both *dmrs-UplinkForPUSCH-MappingTypeA* and *dmrs-UplinkForPUSCH-MappingTypeB,* the bitwidth of this field equals max $\{x_A, x_B\}$, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CSI request - 0, 1, 2, 3, 4, 5, or 6 bits determined by higher layer parameter *reportTriggerSize.*

- CBG transmission information (CBGTI) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

- 0 bit if *PTRS-UplinkConfig* is not configured and transform precoder is disabled, or if transform precoder is enabled, or if *maxRank*=1*;*

- 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- beta_offset indicator - 0 if the higher layer parameter *betaOffsets* = *semiStatic;* otherwise 2 bits as defined by Table 9.3-3 in [5, TS 38.213].

- DMRS sequence initialization - 0 bit if transform precoder is enabled; 1 bit if transform precoder is disabled.

- UL-SCH indicator - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0" and CSI request of all zero(s).

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

[Table 5]

| |
|---|
| - Identifier for DCI formats - 1 bits |
|         - The value of this bit field is always set to 1, indicating a DL DCI format |
| - Frequency domain resource assignment - subclause 7.3.1.0    $\left\lceil \log_2(N_{RB}^{DL,BWP}(N_{RB}^{DL,BWP}+1)/2) \right\rceil$ bits where $N_{RB}^{DL,BWP}$ is given by |
| if the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: |
| - Random Access Preamble index - 6 bits according to *ra-PreambleIndex* in Subclause 5.1.2 of [8, TS38.321] |
| - UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved |
| - SS/PBCH index - 6 bits. If the value of the "Random Access Preamble index" is not all zeros, this field indicates the SS/PBCH that shall be used to determine the RACH occasion for the PRACH transmission; otherwise, this field is reserved. |
| - PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved |
| - Reserved bits - 10 bits |
| Otherwise, all remaining fields are set as follows: |
| - Time domain resource assignment - 4 bits as defined in Subclause 5.1.2.1 of [6, TS 38.214] |
| - VRB-to-PRB mapping -- 1 bit according to Table 7.3.1.2.2-5 |
| - Modulation and coding scheme - 5 bits as defined in Subclause 5.1.3 of [6, TS 38.214] |
| - New data indicator - 1 bit |
| - Redundancy version - 2 bits as defined in Table 7.3.1.1.1-2 |
| - HARQ process number -4 bits |
| - Downlink assignment index -2 bits as defined in Subclause 9.1.3 of [5, TS 38.213], as counter DAI |
| - TPC command for scheduled PUCCH - 2 bits as defined in Subclause 7.2.1 of [5, TS 38.213] |
| - PUCCH resource indicator -3 bits as defined in Subclause 9.2.3 of [5, TS 38.213] |
| - PDSCH-to-HARQ_feedback timing indicator -3 bits as defined in Subclause 9.2.3 of [5, TS38.213] |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

[Table 6]

| |
|---|
| - Identifier for DCI formats - 1 bits |
|         - The value of this bit field is always set to 1, indicating a DL DCI format |
| - Carrier indicator - 0 or 3 bits as defined in Subclause 10.1 of [5, TS 38.213]. |
| - Bandwidth part indicator - 0, 1 or 2 bits as determined by the number of DL BWPs $n_{BWP,RRC}$ configured by higher layers, excluding the initial DL bandwidth part. The bitwidth for this field is determined as $\left\lceil \log_2(n_{BWP}) \right\rceil$ bits, where |
|     - $n_{BWP}$ = $n_{BWP,RRC}$ +1 if $n_{BWP,RRC} \leq 3$, in which case the bandwidth part indicator is equivalent to the ascending order of the higher layer parameter *BWP-Id*; |
|     - otherwise $n_{BWP}$ = $n_{BWP,RRC}$, in which case the bandwidth part indicator is defined in Table 7.3.1.1.2-1; |
|     If a UE does not support active BWP change via DCI, the UE ignores this bit field. |

- Frequency domain resource assignment - number of bits determined by the following, where $N_{RB}^{DL,BWP}$ is the size of the active DL bandwidth part:

    - $N_{RBG}$ bits if only resource allocation type 0 is configured, where $N_{RBG}$ is defined in Subclause 5.1.2.2.1 of [6, TS38.214],

    - $\left\lceil \log_2(N_{RB}^{DL,BWP}(N_{RB}^{DL,BWP}+1)/2) \right\rceil$ bits if only resource allocation type 1 is configured, or

    - $\max\left(\left\lceil \log_2(N_{RB}^{DL,BWP}(N_{RB}^{DL,BWP}+1)/2) \right\rceil, N_{RBG}\right)+1$ bits if both resource allocation type 0 and 1 are configured.

    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

    - For resource allocation type 0, the $N_{RBG}$ LSBs provide the resource allocation as defined in Subclause 5.1.2.2.1 of [6, TS 38.214].

    - For resource allocation type 1, the $\left\lceil \log_2(N_{RB}^{DL,BWP}(N_{RB}^{DL,BWP}+1)/2) \right\rceil$ LSBs provide the resource allocation as defined in Subclause 5.1.2.2.2 of [6, TS 38.214]

    If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 5.1.2.1 of [6, TS 38.214]. The bitwidth for this field is determined as $\left\lceil \log_2(I) \right\rceil$ bits,

    where I is the number of entries in the higher layer parameter *pdsch-TimeDomainAllocationList* if the higher layer parameter is configured; otherwise I is the number of entries in the default table.

- VRB-to-PRB mapping -- 0 or 1 bit:

    - 0 bit if only resource allocation type 0 is configured or if interleaved VRB-to-PRB mapping is not configured by high layers;

    - 1 bit according to Table 7.3.1.2.2-5 otherwise, only applicable to resource allocation type 1, as defined in Subclause 7.3.1.6 of [4, TS 38.211].

- PRB bundling size indicator -0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].

- Rate matching indicator - 0, 1, or 2 bits according to higher layer parameters *rateMatchPatternGroup1* and *rateMatchPatternGroup2,* where the MSB is used to indicate *rateMatchPatternGroup1* and the LSB is used to indicate *rateMatchPatternGroup2* when there are two groups.

- ZP CSI-RS trigger - 0, 1, or 2 bits as defined in Subclause 5.1.4.2 of [6, TS 38.214]. The bitwidth for this field is determined as $\left\lceil \log_2(n_{ZP}+1) \right\rceil$ bits, where $n_{ZP}$ is the number of aperiodic ZP CSI-RS resource sets configured by higher layer.

For transport block 1 :

    - Modulation and coding scheme - 5 bits as defined in Subclause 5.1.3.1 of [6, TS 38.214]

    - New data indicator - 1 bit

    - Redundancy version - 2 bits as defined in Table 7.3.1.1.1-2

For transport block 2 (only present if *maxNrofCodeWordsScheduledByDCI* equals 2) :

- Modulation and coding scheme - 5 bits as defined in Subclause 5.1.3.1 of [6, TS 38.214]
- New data indicator - 1 bit
- Redundancy version - 2 bits as defined in Table 7.3.1.1.1-2

If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsSheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number - 4 bits
- Downlink assignment index - number of bits as defined in the following

  - 4 bits if more than one serving cell are configured in the DL and the higher layer parameter *pdsch-HARQ-ACK-Codebook=dynamic,* where the 2 MSB bits are the counter DAI and the 2 LSB bits are the total DAI;
  - 2 bits if only one serving cell is configured in the DL and the higher layer parameter *pdsch-HARQ-ACK-Codebook=dynamic,* where the 2 bits are the counter DAI;
  - 0 bits otherwise.

- TPC command for scheduled PUCCH-2 bits as defined in Subclause 7.2.1 of [5, TS 38.213]
- PUCCH resource indicator - 3 bits as defined in Subclause 9.2.3 of [5, TS 38.213]
- PDSCH-to-HARQ_feedback timing indicator - 0, 1, 2, or 3 bits as defined in Subclause 9.2.3 of [5, TS 38.213].

The bitwidth for this field is determined as $\lceil \log_2(I) \rceil$ bits, where *I* is the number of entries in the higher layer parameter *dl-DataToUL-ACK*

- Antenna port(s) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_{0,...},p_{\upsilon-1}\}$ shall be determined according to the ordering of DMRS port(s) given by Tables 7.3.1.2.2-1/2/3/4.

  If a UE is configured with both *dmrs-DownlinkForPDSCH-MappingTypeA* and *dmrs-DownlinkForPDSCH-MappingTypeB,* the bitwidth of this field equals max $\{x_A,x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A$-$x_B|$ zeros are padded in the MSB of this field, if the mapping type of the PDSCH corresponds to the smaller value of $x_A$ and $x_B$.

- Transmission configuration indication - 0 bit if higher layer parameter *tci-PresentInDCI* is not enabled; otherwise 3 bits as defined in Subclause 5.1.5 of [6, TS38.214].

  If "Bandwidth part indicator" field indicates a bandwidth part other than the active bandwidth part,
  - if the higher layer parameter *tci-PresentInDCI* is not enabled for the CORESET used for the PDCCH carrying the DCI format 1_1,

    - the UE assumes *tci-PresentInDCI* is not enabled for all CORESETs in the indicated bandwidth part;

  - otherwise,

(continued)

| |
|---|
| - the UE assumes *tci-PresentInDCI* is enabled for all CORESETs in the indicated bandwidth part. |
| - SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214]. |
| - CBG transmission information (CBGTI) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH. |
| - CBG flushing out information (CBGFI) - 1 bit if higher layer parameter *codeBlockGroupFlushIndicator* is configured as "TRUE", 0 bit otherwise. |
| - DMRS sequence initialization - 1 bit. |

Hereinafter, a time domain resource allocation method regarding a data channel in a 5G wireless communication system will be described.

A base station may configure a table for time domain resource allocation information regarding a PDSCH and a PUSCH for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 7 or Table 8 below may be transmitted from the base station to the UE.

[Table 7]

| *PDSCH-TimeDomainResourceAllocationList information element* |
|---|
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br>    k0 INTEGER(0..32) OPTIONAL, -- Need S<br>    (PDCCH-to-PDSCH timing, slot unit)<br>    mappingType ENUMERATED {typeA, typeB},<br>    (PDSCH mapping type)<br>    startSymbolAndLength INTEGER (0..127)<br>    (start symbol and length of PDSCH)<br>    } |

[Table 8]

| *PUSCH-TimeDomainResourceAllocationList information element* |
|---|
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE { |

```
        k2
INTEGER(0..32)                          OPTIONAL,      -- Need S
            (PDCCH-to-PUSCH timing, slot unit)
                mappingType
ENUMERATED {typeA, typeB},
                (PUSCH mapping type)
        startSymbolAndLength                                INTEGER (0..127)
                (start symbol and length of PUSCH)
        }
```

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

Hereinafter, a frequency domain resource allocation method for a data channel in a 5G wireless communication system will be described.

A 5G wireless communication system supports two types, such as resource allocation type 0 and resource allocation type 1, as a method for indicating frequency domain resource allocation information for a PDSCH and a PUSCH.

## Resource allocation type 0

RB allocation information may be notified from a base station to a UE in the form of a bitmap for a resource block group (RBG). The RBG may be configured by a set of consecutive virtual RBs (VRBs), and the size P of the RBG may be determined based on a value configured via a higher layer parameter *(rbg-Size)* and a value of the size of a BWP defined in Table below.

[Table 9]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

A total number of RBGs ($N_{RBG}$) of bandwidth part i having a size of $N_{BWP,i}^{size}$ may be defined as follows.

$$N_{RBG} = \left\lceil \left( N_{BWP,i}^{size} + \left( N_{BWP,i}^{start} \bmod P \right) \right) / P \right\rceil ,$$

where

the size of the first RBG is $RBG_0^{size} = P - N_{BWP,i}^{start} \bmod P$ ,

the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and P otherwise,

the size of all other RBGs is P.

Each bit of a bitmap having a size of $N_{RBG}$ bits may correspond to each RBG. RBGs may be assigned indices according to a sequence in which frequency increases from the lowest frequency position of a BWP. With respect to $N_{RBG}$ RBGs in a BWP, RBG#0 to RBG#($N_{RBG}$ -1) may be mapped from the most significant bit (MSB) to the least significant bit (LSB) of an RBG bitmap. In case that a specific bit value in a bitmap is 1, the UE may determine that an RBG corresponding to the bit value has been assigned, and in case that a specific bit value in the bitmap is 0, the UE may determine that an RBG corresponding to the bit value has not been assigned.

**Resource Allocation Type 1**

RB allocation information may be notified from a base station to a UE as information on the starting position and length of consecutively assigned VRBs. At this time, interleaving or non-interleaving may be additionally applied to consecutively assigned VRBs. A resource allocation field of resource allocation type 1 may be configured by a resource indication value (RIV), and the RIV may be configured by the starting point ($RB_{start}$) of the VRB and the length ($L_{RBs}$) of the consecutively assigned RB. More specifically, an RIV within a BWP having a size of $N_{BWP,i}^{size}$ may be defined as follows.

$$\text{if } (L_{RBs} - 1) \leq \lfloor N_{BWP}^{size} / 2 \rfloor \text{ then}$$

$$RIV = N_{BWP}^{size}(L_{RBs} - 1) + RB_{start}$$

$$\text{else}$$

$$RIV = N_{BWP}^{size}(N_{BWP}^{size} - L_{RBs} + 1) + (N_{BWP}^{size} - 1 - RB_{start})$$

where RBs $\geq$ 1 and shall not exceed

A base station may configure, for a UE, a resource allocation type via higher layer signaling to the UE (e.g., a higher layer parameter resourceAllocation may be configured to have one value among resourceAllocationType0, resourceAllocationType1, or dynamicSwitch.). In case that the UE is configured with both resource allocation types 0 and 1 (or in the same way, the higher layer parameter resourceAllocation is configured with dynamicSwitch), the base station may indicate whether the resource allocation type is resource allocation type 0 or resource allocation type 1, using a bit corresponding to an MSB in a field indicating resource allocation in a DCI format indicating scheduling. Additionally, based on the indicated resource allocation type, resource allocation information may be indicated through the remaining bits excluding the bit corresponding to the MSB, and the UE may interpret the resource allocation field information of the DCI field based on the indicated resource allocation information. In case that the UE is configured with one of resource allocation type 0 or resource allocation type 1 (or in the same way, the higher layer parameter resourceAllocation is configured to have one value of resourceAllocationType0 or resourceAllocationType1), resource allocation information may be indicated based on the resource allocation type for which a field indicating resource allocation in a DCI format indicating scheduling is configured, and the UE may interpret the resource allocation field information of the DCI field, based on the indicated resource allocation information.

Hereinafter, a downlink control channel in a 5G communication system will be described in more detail with reference to the accompanying drawings.

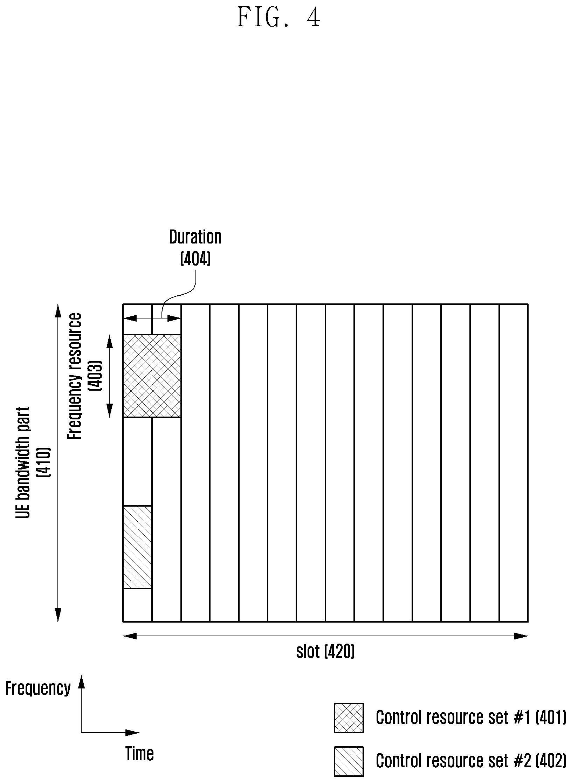

FIG. 4 illustrates an example of a control resource set used to transmit a downlink control channel in a 5G communication system.

Referring to FIG. 4, a UE BWP 410 may be configured along the frequency axis, and two control resource sets (control resource set #1 401 and control resource set #2 402) may be configured within one slot 420 along the time axis. The control resource sets 401 and 402 may be configured in a specific frequency resource 403 within the entire UE BWP 420 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G as described above may be configured for a UE by a base station through higher layer signaling (for example, SI, MIB, RRC signaling, etc.). The description that a control resource set is configured for a UE

EP 4 586 517 A1

means that information such as a control resource set identity, the control resource set's frequency location, and the control resource set's symbol duration is provided. For example, this information may include the following pieces of information given in Table 10 below.

[Table 10]

```
ControlResourceSet  ::=              SEQUENCE {
    -- Corresponds to L1 parameter 'CORESET-ID'


    controlResourceSetId          ControlResourceSetId,
     (control resource set identity)
    frequencyDomainResources          BIT STRING (SIZE (45)),
```

20

```
                      (frequency domain resource assignment information)
                      duration                          INTEGER (1..maxCoReSetDuration),
                      (time domain resource assignment information)
                      cce-REG-MappingType               CHOICE {
                      (CCE-to-REG mapping type)
                      interleaved                       SEQUENCE {

                        reg-BundleSize                  ENUMERATED {n2, n3, n6},
                            (REG bundle size)

                        precoderGranularity             ENUMERATED {sameAsREG-bun
                        dle, allContiguousRBs},

                        interleaverSize                 ENUMERATED {n2, n3, n6}
                        (interleaver size)

                        shiftIndex                      INTEGER(0..maxNrofPhysicalReso
                        urceBlocks-1)                        OPTIONAL
                          (interleaver shift)
                          },
                      nonInterleaved                    NULL
                      },
                      tci-StatesPDCCH                   SEQUENCE(SIZE (1..maxNrofTCI
                        -StatesPDCCH)) OF TCI-StateId        OPTIONAL,
                      (QCL configuration information)
                      tci-PresentInDCI                  ENUMERATED {enabled}
                                                        OPTIONAL,   -- Need S

                  }
```

In Table 10, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding CORESET.

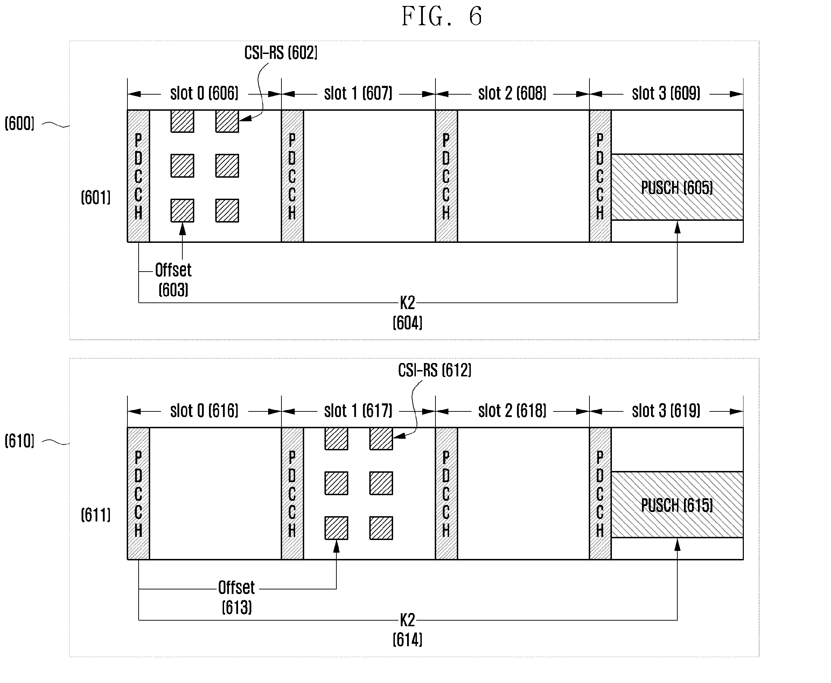

FIG. 6 illustrates an example of a structure of a downlink control channel in a 5G wireless communication system.

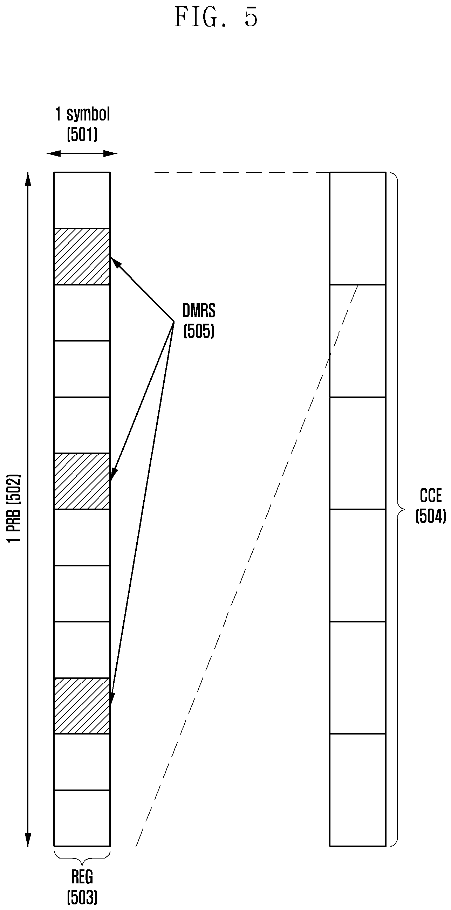

According to FIG. 5, the basic unit of time and frequency resources constituting a control channel may be referred to as a resource element group (REG) 503, and the REG 503 may be defined by one OFDM symbol %n along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5A, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs.

The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, a parameter for a search space regarding a PDCCH may be configured for the UE by the base station through higher layer signaling. For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 11 below.

[Table 11]

```
SearchSpace ::=                         SEQUENCE {
    -- Identity of the search space. SearchSpaceId = 0 identifies the SearchSp
      ace configured via PBCH (MIB) or ServingCellConfigCommon.
    searchSpaceId                       SearchSpaceId,
    (search space identity)
    controlResourceSetId                ControlResourceSetId,
    (control resource set identity)
    monitoringSlotPeriodicityAndOffset      CHOICE {
    (monitoring slot level periodicity)
    sl1                                 NULL,
    sl2                                 INTEGER (0..1),
    sl4                                 INTEGER (0..3),
    sl5                                 INTEGER (0..4),
    sl8                                 INTEGER (0..7),
    sl10                                INTEGER (0..9),
    sl16                                INTEGER (0..15),
    sl20                                INTEGER (0..19)
    }
                                OPTIONAL,
    duration (monitoring duration)              INTEGER (2..2559)
    monitoringSymbolsWithinSlot             BIT STRING (SIZE (14))
                                            OPTIONAL,
    (monitoring symbols within slot)
    nrofCandidates                      SEQUENCE {
    (number of PDCCH candidates for each aggregation level)
    aggregationLevel1                   ENUMERATED {n0, n1, n2, n3, n4,
      n5, n6, n8},
    aggregationLevel2                   ENUMERATED {n0, n1, n2, n3, n4,
      n5, n6, n8},
```

```
aggregationLevel4                    ENUMERATED {n0, n1, n2, n3, n4,
n5, n6, n8},
aggregationLevel8                    ENUMERATED {n0, n1, n2, n3, n4,
n5, n6, n8},
aggregationLevel16                       ENUMERATED {n0, n1, n2, n3,
n4, n5, n6, n8}
},


searchSpaceType                      CHOICE {
(search space type)
-- Configures this search space as common search space (CSS) and DCI
    formats to monitor.
common                               SEQUENCE {
(common search space)
    }
ue-Specific                          SEQUENCE {
(UE-specific search space)
    -- Indicates whether the UE monitors in this USS for DCI formats 0-0
    and 1-0 or for formats 0-1 and 1-1.
formats                              ENUMERATED {formats0-0-And-
1-0, formats0-1-And-1-1},
    ...
    }
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, MCS-C-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

C-RNTI: used to schedule a UE-specific PDSCH
MCS-C-RNTI: used to schedule a UE-specific PDSCH
Temporary cell RNTI (TC-RNTI): used to schedule a UE-specific PDSCH
CS-RNTI: used to schedule a semi-statically configured UE-specific PDSCH
RA-RNTI: used to schedule a PDSCH in a random access step
P-RNTI: used to schedule a PDSCH in which paging is transmitted
SI-RNTI: used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI) for indicating power control command for PUCCH
Transmit power control for SRS RNTI (TPC-SRS-RNTI): used to indicate a power control command regarding an SRS

The DCI formats enumerated above may follow the definitions given below.

[Table 12]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands f or SRS transmissions by one or more UEs |

In a 5G wireless communication system, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- *L:* aggregation level
- $n_{CI}$: carrier index
- $N_{CCE,p}$: total number of CCEs existing in control resource set *p*
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L

- $i = 0, ..., L-1$

- $$Y_{p,n_{s,f}^{\mu}} = \left(A_p \cdot Y_{p,n_{s,f}^{\mu}-1}\right) \bmod D$$
, $Y_{p,-1} = n_{RNTI} \neq 0$ , $A_p = 39827$ *for pmod*$3 = 0$, $A_p = 39829$ *for pmod*$3 = 1$ , $A_p = 39839$ *for pmod*$3 = 2$ , $D = 65537$

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

[CSI framework]

In the NR system, there is a CSI framework for indicating, by a base station, measurement and reporting of channel state information (CSI) to a UE. The CSI framework of NR may be configured by at least two elements including resource setting and report setting. Report setting may have a connection relationship with resource setting by referring to at least one ID of the resource setting.

According to an embodiment of the disclosure, resource setting may include information related to a reference signal for measuring channel state information by a UE. A base station may configure at least one resource setting for a UE. For example, the base station and the UE may transmit and receive signaling information described as shown in Table 13 below to transfer information relating to resource setting.

【Table 13】

```
-- ASN1START
-- TAG-CSI-RESOURCECONFIG-START


CSI-ResourceConfig ::=          SEQUENCE {
      csi-ResourceConfigId          ,
      csi-RS-ResourceSetList        CHOICE {
           nzp-CSI-RS-SSB                  SEQUENCE {
                nzp-CSI-RS-ResourceSetList    SEQUENCE (SIZE (1..maxNrofNZP-
CSI-RS-ResourceSetsPerConfig)) OF NZP-CSI-RS-ResourceSetId


OPTIONAL, -- Need R
                csi-SSB-ResourceSetList        SEQUENCE (SIZE (1..maxNrofCSI-
SSB-ResourceSetsPerConfig)) OF CSI-SSB-ResourceSetId


OPTIONAL    -- Need R
           },
           csi-IM-ResourceSetList         SEQUENCE (SIZE (1..maxNrofCSI-IM-
ResourceSetsPerConfig)) OF CSI-IM-ResourceSetId
      },


      bwp-Id                        BWP-Id,
      resourceType                  ENUMERATED { aperiodic, semiPersistent,
periodic },
      ...
}


-- TAG-CSI-RESOURCECONFIG-STOP
-- ASN1STOP
```

In Table 13, the signaling CSI-ResourceConfig may include information relating to each resource setting. Each CSI-ResourceConfig may include S(≥1) CSI resource sets (given by a higher layer parameter csi-RS- ResourceSetList). Each CSI resource set may be located in a DL BWP identified by a higher layer parameter bwp-id, and the resource setting may be connected to the report setting of the same downlink BWP.

According to the signaling information, each resource setting may include a resource setting index (csi-ResourceConfigId), a BWP index (bwp-ID), time domain transmission configuration of resources (resourceType), or a resource set list (csi-RS-ResourceSetList) including at least one resource set. Time domain transmission configuration of resources may be configured as aperiodic transmission, semi-persistent transmission, or periodic transmission. With respect to periodic or semi-persistent CSI resource setting, the number of CSI-RS resource sets may be limited to S=1, and the configured period and slot offset may be given as a numerology of DL BWP identified by bwp-id.

A resource set list may be a set including resource sets for channel measurement, or a set including resource sets for interference measurement. When a resource set list is a set including resource sets for channel measurement, each resource set may include at least one resource, and the at least one resource may correspond to an index of a CSI reference signal (CSI-RS) resource or an SS/PBCH block. When a resource set list is a set including resource sets for interference measurement, each resource set may include at least one interference measurement resource (CSI interference measurement (CSI-IM)).

For example, when a resource set includes a CSI-RS, a base station and a UE may transmit and receive signaling information described as shown in Table 14 below to transfer information relating to the resource set.

【Table 14】

```
-- ASN1START
-- TAG-NZP-CSI-RS-RESOURCESET-START
NZP-CSI-RS-ResourceSet ::=              SEQUENCE {
    nzp-CSI-ResourceSetId              NZP-CSI-RS-ResourceSetId,
```

```
    nzp-CSI-RS-Resources                        SEQUENCE (SIZE (1..maxNrofNZP-
SI-RS-ResourcesPerSet)) OF NZP-CSI-RS-ResourceId,
    repetition                                  ENUMERATED {  on,  off }
OPTIONAL,      -- Need S
    aperiodicTriggeringOffset                            INTEGER(0..6)
OPTIONAL,      -- Need S
    trs-Info                                    ENUMERATED  {true}
OPTIONAL,      -- Need R
    …
}


-- TAG-NZP-CSI-RS-RESOURCESET-STOP
-- ASN1STOP
```

In Table 14, the signaling information NZP-CSI-RS-ResourceSet includes information relating to each resource set. According to the signaling information, each resource set may include at least information relating to a resource set index (nzp-CSI-ResourceSetId) or a CSI-RS index set (nzp-CSI-RS-Resources). Further, each resource set may include a part of information (repetition) relating to a spatial domain transmission filter of a CSI-RS resource, or information (trs-Info) relating to whether a CSI-RS resource has a tracking purpose.

A CSI-RS may be the most representative reference signal included in a resource set. A base station and a UE may transmit and receive signaling information described as shown in Table 15 below to transfer information relating to a CSI-RS resource.

[Table 15]

```
-- ASN1START
-- TAG-NZP-CSI-RS-RESOURCE-START
NZP-CSI-RS-Resource ::= SEQUENCE {
nzp-CSI-RS-ResourceId NZP-CSI-RS-ResourceId,
resourceMapping CSI-RS-ResourceMapping,
powerControlOffset INTEGER (-8..15),
powerControlOffsetSS ENUMERATED{db-3, db0, db3, db6} OPTIONAL, -- Need R
scramblingID ScramblingId,
periodicityAndOffset CSI-ResourcePeriodicityAndOffset OPTIONAL, -- Cond Perio dicOrSemiPersistent
qcl-InfoPeriodicCSI-RS TCI-StateId OPTIONAL, -- Cond Periodic
...
}
-- TAG-NZP-CSI-RS-RESOURCE-STOP
-- ASN1STOP
```

In Table 15, the signaling information NZP-CSI-RS-Resource includes information relating to each CSI-RS. The information included in the signaling information NZP-CSI-RS-Resource may have meanings as below.

- nzp-CSI-RS-ResourceId: a CSI-RS resource index
- resourceMapping: resource mapping information of a CSI-RS resource
- powerControlOffset: a ratio between PDSCH energy per RE (EPRE) and CSI-RS EPRE
- powerControlOffsetSS: a ratio between SS/PBCH block EPRE and CSI-RS EPRE
- scramblingID: the scrambling index of a CSI-RS sequence

    periodicity AndOffset: the transmission period and the slot offset of a CSI-RS resource
    qcl-InfoPeriodicCSI-RS: TCI-state information when a corresponding CSI-RS is a periodic CSI-RS.
    resourceMapping included in the signaling NZP-CSI-RS-Resource may indicate resource mapping information of a CSI-RS resource, and may include RE mapping for frequency resources, the number of antenna ports, symbol mapping, code division multiplexing (CDM) type, frequency resource density, and frequency band mapping information. The number of ports, frequency resource density, CDM type, and time-frequency domain RE mapping, which may be configured through the resource mapping information, may have a value determined in one of the rows shown in Table 16.

【Table 16】

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | No CDM | $(k_0,l_0),\ (k_0+4,l_0),\ (k_0+8,l_0)$ | 0,0,0 | 0 | 0 |
| 2 | 1 | 1, 0.5 | No CDM | $(k_0,l_0)$ | 0 | 0 | 0 |
| 3 | 2 | 1, 0.5 | FD-CDM2 | $(k_0,l_0)$ | 0 | 0,1 | 0 |
| 4 | 4 | 1 | FD-CDM2 | $(k_0,l_0),(k_0+2,l_0)$ | 0,1 | 0,1 | 0 |
| 5 | 4 | 1 | FD-CDM2 | $(k_0,l_0),(k_0,l_0+1)$ | 0,1 | 0,1 | 0 |
| 6 | 8 | 1 | FD-CDM2 | $(k_0,l_0),(k_1,l_0),(k_2,l_0),(k_3,l_0)$ | 0,1,2,3 | 0,1 | 0 |
| 7 | 8 | 1 | FD-CDM2 | $(k_0,l_0),(k_1,l_0),(k_0,l_0+1),(k_1,l_0+1)$ | 0,1,2,3 | 0,1 | 0 |
| 8 | 8 | 1 | CDM4 (FD2,TD2) | $(k_0,l_0),(k_1,l_0)$ | 0,1 | 0,1 | 0,1 |
| 9 | 12 | 1 | FD-CDM2 | $(k_0,l_0),(k_1,l_0),(k_2,l_0),(k_3,l_0),(k_4,l_0),(k_5,l_0)$ | 0,1,2,3,4,5 | 0,1 | 0 |
| 10 | 12 | 1 | CDM4 (FD2,TD2) | $(k_0,l_0),(k_1,l_0),(k_2,l_0)$ | 0,1,2 | 0,1 | 0,1 |
| 11 | 16 | 1, 0.5 | FD-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1)$ | 0,1,2,3, 4,5,6,7 | 0,1 | 0 |
| 12 | 16 | 1, 0.5 | CDM4 (FD2,TD2) | $(k_0,l_0),(k_1,l_0),(k_2,l_0),(k_3,l_0)$ | 0,1,2,3 | 0,1 | 0,1 |
| 13 | 24 | 1, 0.5 | FD-CDM2 | $(k_0,l_0),(k_1,l_0),(k_2,l_0),(k_0,l_0+1),(k_1,l_0+1),(k_2,l_0+1),$ $(k_0,l_1),(k_1,l_1),(k_2,l_1),(k_0,l_1+1),(k_1,l_1+1),(k_2,l_1+1)$ | 0,1,2,3,4,5, 6,7,8,9,10,11 | 0,1 | 0 |
| 14 | 24 | 1, 0.5 | CDM4 (FD2,TD2) | $(k_0,l_0),(k_1,l_0),(k_2,l_0),(k_0,l_1),(k_1,l_1),(k_2,l_1)$ | 0,1,2,3,4,5 | 0,1 | 0,1 |
| 15 | 24 | 1, 0.5 | CDM8 (FD2,TD4) | $(k_0,l_0),(k_1,l_0),(k_2,l_0)$ | 0,1,2 | 0,1 | 0,1, 2,3 |
| 16 | 32 | 1, 0.5 | FD-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1),$ $(k_0,l_1),(k_1,l_1),(k_2,l_1),(k_3,l_1),$ $(k_0,l_1+1),(k_1,l_1+1),(k_2,l_1+1),(k_3,l_1+1)$ | 0,1,2,3, 4,5,6,7, 8,9,10,11, 12,13,14,15 | 0,1 | 0 |
| 17 | 32 | 1, 0.5 | CDM4 (FD2,TD2) | $(k_0,l_0),(k_1,l_0),(k_2,l_0),(k_3,l_0),(k_0,l_1),(k_1,l_1),(k_2,l_1),(k_3,l_1)$ | 0,1,2,3,4,5,6,7 | 0,1 | 0,1 |
| 18 | 32 | 1, 0.5 | CDM8 (FD2,TD4) | $(k_0,l_0),(k_1,l_0),(k_2,l_0),(k_3,l_0)$ | 0,1,2,3 | 0,1 | 0,1, 2,3 |

Table 16 shows a frequency resource density configurable according to the number (X) of CSI-RS ports, a CDM type, frequency and time domain starting positions $(\bar{k},\bar{l})$ of a CSI-RS component RE pattern, and the number (k') of frequency domain REs and the number (l') of time domain REs of a CSI-RS component RE pattern. The CSI-RS component RE pattern described above may be a basic unit for configuring a CSI-RS resource. A CSI-RS component RE pattern may be configured by YZ number of REs through Y=1+max(k') number of frequency domain REs and Z=1+max(l') number of time domain REs.

When the number of CSI-RS ports is 1, the position of a CSI-RS RE may be designated in a PRB without restriction on subcarriers, and may be designated by a bitmap of 12 bits. When the number of CSI-RS ports is {2, 4, 8, 12, 16, 24, 32} ports, and Y=2, the position of a CSI-RS RE may be designated at every two subcarriers in a PRB, and may be designated by a bitmap of 6 bits. When the number of CSI-RS ports is 4, and Y=4, the position of a CSI-RS RE may be designated at every four subcarriers in a PRB, and may be designated by a bitmap of 3 bits. Similarly, the position of a time domain RE may be designated by a bitmap having a total of 14 bits. Here, according to a Z value shown in Table 25, the length of a bitmap may be changed like a frequency position designation. However, the principle of the change is similar to the description above, and therefore, a duplicate description will be omitted hereinafter.

According to an embodiment of the disclosure, report settings may have a connection relationship with each other by referring to at least one ID of the resource setting, and resource setting(s) that have a connection relationship with the report setting provides configuration information including information about reference signal for measuring channel information. When resource setting(s) having a connection relationship with a report setting are used to measure channel information, the measured channel information may be used to report channel information according to the reporting method configured in the report setting that has a connection relationship.

According to an embodiment of the disclosure, the report setting may include configuration information related to the CSI reporting method. For example, the base station and the UE may transmit and receive signaling information as shown in Table 17 to transfer information about report settings.

【Table 17】

```
-- ASN1START

-- TAG-CSI-REPORTCONFIG-START


CSI-ReportConfig ::=                    SEQUENCE {
    reportConfigId                          CSI-ReportConfigId,
    carrier                                          ServCellIndex
OPTIONAL,     -- Need S
    resourcesForChannelMeasurement       CSI-ResourceConfigId,
    csi-IM-ResourcesForInterference             CSI-ResourceConfigId
OPTIONAL,     -- Need R
    nzp-CSI-RS-ResourcesForInterference         CSI-ResourceConfigId
OPTIONAL,     -- Need R
    reportConfigType                     CHOICE {
        periodic                             SEQUENCE {
            reportSlotConfig                                    CSI-
ReportPeriodicityAndOffset,
            pucch-CSI-ResourceList                   SEQUENCE  (SIZE
(1..maxNrofBWPs)) OF PUCCH-CSI-Resource
        },
        semiPersistentOnPUCCH                SEQUENCE {
```

```
                reportSlotConfig                                    CSI-
ReportPeriodicityAndOffset,
                    pucch-CSI-ResourceList                 SEQUENCE (SIZE
(1..maxNrofBWPs)) OF PUCCH-CSI-Resource
            },
            semiPersistentOnPUSCH                   SEQUENCE {
                reportSlotConfig                    ENUMERATED {sl5, sl10,
sl20, sl40, sl80, sl160, sl320},
                reportSlotOffsetList                    SEQUENCE (SIZE (1..
maxNrofUL-Allocations)) OF INTEGER(0..32),
                p0alpha                             P0-PUSCH-AlphaSetId
            },
            aperiodic                           SEQUENCE {
                reportSlotOffsetList                     SEQUENCE (SIZE
(1..maxNrofUL-Allocations)) OF INTEGER(0..32)
            }
        },
        reportQuantity                      CHOICE {
            none                                    NULL,
            cri-RI-PMI-CQI                          NULL,
            cri-RI-i1                               NULL,
            cri-RI-i1-CQI                       SEQUENCE {
                pdsch-BundleSizeForCSI                  ENUMERATED {n2, n4}
OPTIONAL    -- Need S
            },
            cri-RI-CQI                              NULL,
            cri-RSRP                                NULL,
            ssb-Index-RSRP                          NULL,
            cri-RI-LI-PMI-CQI                       NULL
        },
        reportFreqConfiguration             SEQUENCE {
```

```
        cqi-FormatIndicator                    ENUMERATED { widebandCQI,
subbandCQI }                          OPTIONAL,     -- Need R
        pmi-FormatIndicator                              ENUMERATED
{ widebandPMI, subbandPMI }                   OPTIONAL,     -- Need R
        csi-ReportingBand                     CHOICE {
            subbands3                             BIT STRING(SIZE(3)),
            subbands4                             BIT STRING(SIZE(4)),
            subbands5                             BIT STRING(SIZE(5)),
            subbands6                             BIT STRING(SIZE(6)),
            subbands7                             BIT STRING(SIZE(7)),
            subbands8                             BIT STRING(SIZE(8)),
            subbands9                             BIT STRING(SIZE(9)),
            subbands10                            BIT STRING(SIZE(10)),
            subbands11                            BIT STRING(SIZE(11)),
            subbands12                            BIT STRING(SIZE(12)),
            subbands13                            BIT STRING(SIZE(13)),
            subbands14                            BIT STRING(SIZE(14)),
            subbands15                            BIT STRING(SIZE(15)),
            subbands16                            BIT STRING(SIZE(16)),
            subbands17                            BIT STRING(SIZE(17)),
            subbands18                            BIT STRING(SIZE(18)),
            ...,
            subbands19-v1530                      BIT STRING(SIZE(19))
        }     OPTIONAL      -- Need S


    }
OPTIONAL,    -- Need R
    timeRestrictionForChannelMeasurements        ENUMERATED {configured,
notConfigured},
    timeRestrictionForInterferenceMeasurements   ENUMERATED {configured,
notConfigured},
```

```
        codebookConfig
OPTIONAL,      -- Need R
        dummy                                              ENUMERATED {n1,
n2}                                      OPTIONAL,      -- Need R
        groupBasedBeamReporting                   CHOICE {
            enabled                               NULL,
            disabled                              SEQUENCE {
                nrofReportedRS                    ENUMERATED {n1, n2,
n3, n4}                          OPTIONAL      -- Need S
            }
        },
        cqi-Table                 ENUMERATED {table1, table2, table3, spare1}
OPTIONAL,      -- Need R
        subbandSize               ENUMERATED {value1, value2},
        non-PMI-PortIndication        SEQUENCE  (SIZE  (1..maxNrofNZP-CSI-RS-
ResourcesPerConfig)) OF PortIndexFor8Ranks OPTIONAL,      -- Need R

        ...,
        [[
        semiPersistentOnPUSCH-v1530           SEQUENCE {
            reportSlotConfig-v1530                ENUMERATED {sl4, sl8, sl16}
        }
OPTIONAL      -- Need R
        ]]
}
```

In Table 17, the signaling information CSI-ReportConfig includes information about each report setting. Information included in the signaling information CSI-ReportConfig may have the following meaning.

- reportConfigId: report setting index
- carrier: serving cell index
- resourcesForChannelMeasurement: Resource setting index for channel measurement having a connection relationship with report setting
- csi-IM-ResourcesForInterference: Resource setting index having CSI-IM resources for interference measurement having a connection relationship with the report setting
- nzp-CSI-RS-ResourcesForInterference: Resource setting index having CSI-RS resources for interference measurement having a connection relationship with report setting
- reportConfigType: Indicates the time domain transmission setting and transmission channel of channel reporting, and may have aperiodic transmission, semi-persistent PUCCH transmission, semi-persistent PUSCH transmission, or periodic transmission settings.

- reportQuantity: Indicates the type of channel information to be reported, and may have the type of channel information for when channel reporting is not transmitted ("none") and when channel reporting is transmitted ("cri-RI-PMI-CQI", "cri- RI-i1", "cri-RI-i1-CQI", "cri-RI-CQI", "cri-RSRP", "ssb-Index-RSRP", and "cri-RI-LI-PMI-CQI"). Here, the elements included in the type of channel information refers to a channel quality indicator (CQI), a precoding matrix indicator (PMI), a CSI-RS resource indicator (CRI), an SS/PBCH block resource indicator (SSBRI), a layer indicator (LI), a rank indicator (RI), and/or Layer 1-reference signal received power (L1-RSRP).
- reportFreqConfiguration: Indicates whether channel information to be reported includes only information about a full band (wideband) or information about each subband. In case that the channel information includes information about each subband, configuration information about the subband including the channel information may be included.
- timeRestrictionForChannelMeasurements: Whether there are time domain restrictions on the reference signal for channel measurement among the reference signals referenced by channel information to be reported.
- timeRestrictionForInterferenceMeasurements: Whether there are time domain restrictions on the reference signal for interference measurement among the reference signals referenced by channel information to be reported.
- codebookConfig: Codebook information referenced by channel information to be reported
- groupBasedBeamReporting: Whether or not beam grouping for channel reporting occurs
- cqi-Table: CQI table index referenced by channel information to be reported
- subbandSize: Index indicating the subband size of channel information
- non-PMI-PortIndication: Port mapping information referenced when reporting non-PMI channel information

When the base station indicates to perform channel information reporting via higher layer signaling or L1 signaling, the UE may perform channel information reporting by referring to the above configuration information included in the indicated report settings.

The base station may instruct the UE to perform CSI reporting via RRC signaling or higher layer signaling including medium access control (MAC) control element (CE) signaling, or L1 signaling (e.g., common DCI, group-common DCI, UE-specific DCI).

For example, the base station may provide the UE with an indication of an aperiodic channel information report (CSI report) via higher layer signaling or DCI using DCI format 0_1. The base station configures parameters for aperiodic CSI reporting of the UE or a plurality of CSI report trigger states including parameters for a CSI report via higher layer signaling. The parameters for CSI report or CSI report trigger state may include a set including a slot interval or possible slot interval between a PDCCH including DCI and a PUSCH including a CSI report, a reference signal ID for channel state measurement, and type of channel information to be included.

When the base station provides the UE with an indication of some of the multiple CSI report trigger states through DCI, the UE reports channel information according to a CSI report setting of report settings configured in the indicated CSI report trigger state. Aperiodic CSI reporting may be triggered by the CSI request field of the aforementioned DCI format 0_1, which corresponds to the scheduling DCI for PUSCH. The CSI request indicator may be configured to be $N_{TS}$ (=0, 1, 2, 3, 4, 5, or 6) bits and may be determined by higher layer signaling (reportTriggerSize). Among one or multiple aperiodic CSI reporting trigger states that may be configured by higher layer signaling (CSI-AperiodicTriggerStateList), one trigger state may be triggered by a CSI request indicator.

- When all bits of the CSI request field are 0, this may mean that no CSI reporting is requested.
- When the number (M) of CSI trigger states in the configured CSI-AperiodicTriggerStateLite is greater than $2^{N_{Ts}}-1$, the M CSI trigger states may be mapped to $2^{N_{Ts}}-1$ according to a predefined mapping relationship, and one of the $2^{N_{Ts}}-1$ CSI trigger states may be indicated by the CSI request field.
- When the number (M) of CSI trigger states in the configured CSI-AperiodicTriggerStateLite is equal to or less than $2^{N_{Ts}}-1$, one of the M CSI trigger states may be indicated by the CSI request field.

Table 18 below shows an example of the relationship between a CSI request indicator and a CSI trigger state that may be indicated by the indicator.

[Table 18]

| CSI request field | CSI trigger state | CSI-ReportConfigId | CSI-ResourceConfigId |
| --- | --- | --- | --- |
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |

(continued)

| CSI request field | CSI trigger state | CSI-ReportConfigId | CSI-ResourceConfigId |
|---|---|---|---|
| 11 | CSI trigger state#3 | CSI report#4 | CSI resource#4 |

The channel information reporting may be performed through a PUSCH scheduled by DCI format 0_1. When one bit corresponding to an uplink data indicator (UL-SCH indicator) in DCI format 0_1 indicates "1", the uplink data (UL-SCH) and the acquired CSI may be multiplexed and transmitted to a PUSCH resource scheduled by DCI format 0_1. When one bit corresponding to the uplink data indicator (UL-SCH indicator) in DCI format 0_1 indicates "0", only the CSI without uplink data (UL-SCH) may be mapped and transmitted to the PUSCH resource scheduled by DCI format 0_1. Time domain resource allocation for a PUSCH including the CSI report of the UE may be performed through indication of a slot interval between a PDCCH indicated through DCI and the PUSCH, the start symbol and symbol length within a slot for the time domain resource allocation for the PUSCH, and the like. For example, the position of a slot, in which the PUSCH including the CSI report of the UE is transmitted, can be indicated through a slot interval between the PDCCH indicated through DCI and the PUSCH, and the start symbol and symbol length within a slot can be indicated via the time domain resource assignment field of the DCI described above. The period of the PUSCH resource for transmission of CSI and the slot offset may be given based on the numerology of the UL BWP configured to transmit the CSI report.

For example, the base station may provide the UE with an indication of a semi-persistent CSI report transmitted to a PUSCH through DCI using DCI format 0_1. The base station may activate or deactivate the semi-persistent CSI report transmitted to a PUSCH through DCI scrambled by SP-CSI-RNTI. When semi-persistent CSI report is activated, the UE may report channel information periodically according to the configured slot interval. When the semi-persistent CSI report is deactivated, the UE may stop the periodic channel information report that has been activated.

The base station configures, via higher layer signaling, parameters for a semi-persistent CSI report of the UE or multiple CSI report trigger states including the parameters for the semi-persistent CSI report. The parameters for the CSI report or the CSI report trigger state may include a set including a slot interval or a possible slot interval between a PDCCH including DCI indicating the CSI report and a PUSCH including the CSI report, a slot interval between a slot in which higher layer signaling indicating the CSI report is activated and the PUSCH including the CSI report, the slot interval period of the CSI report, and the type of channel information included.

When the base station activates some of the multiple CSI report trigger states or some of the multiple report settings to the UE via higher layer signaling or DCI, the UE may report channel information according to the report setting included in the indicated CSI report trigger state or the CSI report setting configured in the activated report setting. The channel information reporting may be performed through PUSCH, which is semi-persistently scheduled by DCI format 0_1 scrambled by SP-CSI-RNTI. The time domain resource allocation for a PUSCH including the CSI report of the UE may be performed through indication of a slot interval period of the CSI report, a slot interval between a slot in which higher layer signaling is activated and the PUSCH, a slot interval between the PDCCH indicated through DCI and the PUSCH, the start symbol and the symbol length within a slot for the time domain resource allocation for the PUSCH, and the like. For example, the position of a slot, in which the PUSCH including the CSI report of the UE is transmitted, can be indicated through a slot interval between the PDCCH indicated through DCI and the PUSCH, and the start symbol and symbol length within a slot can be indicated via the time domain resource assignment field of the DCI format 0_1 described above.

For example, the base station may provide the UE with an indication of a semi-persistent CSI report transmitted to a PUCCH via higher layer signaling such as MAC-CE. Through the MAC-CE signaling, the base station may activate or deactivate the semi-persistent CSI report transmitted to a PUCCH. When the semi-persistent CSI report is activated, the UE may report channel information periodically according to the configured slot interval. When the semi-persistent CSI report is deactivated, the UE may stop periodically reporting channel information that has been activated.

The base station configures parameters for the semi-persistent CSI report of the UE via higher layer signaling. The parameters for the CSI report may include a PUCCH resource through which the CSI report is transmitted, the slot interval period of the CSI report, and the type of channel information included. The UE may transmit the CSI report through a PUCCH. Alternatively, when the PUCCH for the CSI report overlaps with the PUSCH, the UE may transmit the CSI report to the PUSCH. The position of a slot, in which the PUCCH including the CSI report is transmitted, can be indicated through the slot interval period of the CSI report configured via higher layer signaling and the slot interval between a slot in which higher layer signaling is activated and the PUCCH including the CSI report, and the start symbol and the symbol length within a slot can be indicated via the start symbol, to which a PUCCH resource configured via higher layer signaling is allocated, and the symbol length. The period and slot offset of a PUCCH or PUSCH resource for transmitting CSI may be given based on the numerology of a UL BWP configured for transmission of the CSI report.

For example, the base station may provide the UE with an indication of a periodic CSI report via higher layer signaling. The base station may activate or deactivate the periodic CSI report via higher layer signaling including RRC signaling. When the periodic CSI report is activated, the UE may report channel information periodically according to the configured slot interval. When the periodic CSI report is deactivated, the UE may stop periodically reporting channel information that has been activated.

The base station configures report settings including parameters for the periodic CSI report of the UE via higher layer signaling. The parameters for the CSI report may include PUCCH resource configuration for a CSI report, a slot interval between a slot in which higher layer signaling indicating the CSI report is activated and a PUCCH including the CSI report, the slot interval period of the CSI report, reference signal ID for channel state measurement, and the type of channel information included. The UE may transmit the CSI report through a PUCCH. Alternatively, when the PUCCH for the CSI report overlaps with the PUSCH, the UE may transmit the CSI report to the PUSCH. The position of a slot, in which a PUCCH including the CSI report is transmitted, can be indicated through the slot interval period of the CSI report configured via higher layer signaling and a slot interval between the slot in which higher layer signaling is activated and the PUCCH including the CSI report, and the start symbol and symbol length within a slot can be indicated through the start symbol, to which a PUCCH resource configured via higher layer signaling is allocated, and the symbol length. The period of a PUCCH resource to transmit CSI and slot offset may be given based on the numerology of a UL BWP configured for transmission of the CSI report.

When the base station provides the UE with an indication of an aperiodic CSI report or semi-persistent CSI report through DCI, the UE may determine whether the UE is able to perform a valid channel report through the indicated CSI report by considering the channel computation time required for the CSI report (CSI computation time).

For an aperiodic CSI report or semi-persistent CSI report indicated through DCI, the UE may report a valid CSI report starting from an uplink symbol after Z symbol after the last symbol included in a PDCCH including the DCI indicating the CSI report has ended. The Z symbol described above may differ according to the numerology of a downlink BWP corresponding to the PDCCH including DCI indicating the CSI report, the numerology of an uplink BWP corresponding to the PUSCH transmitting the CSI report, and the type or characteristics (report quantity, frequency band granularity, number of ports of a reference signal, codebook type, etc.) of the channel information reported by the CSI report.

In other words, in order for a CSI report to be determined to be a valid CSI report (if the CSI report is to be a valid CSI report), the uplink transmission of the CSI report should not occur before the $Z_{ref}$ symbol, including timing advance. In this case, the $Z_{ref}$ symbol is an uplink symbol in which a cyclic prefix (CP) starts after the time $T_{proc,CSI}=(Z)(2048+144) \cdot \kappa 2^{-\mu} \cdot T_c$ from the moment at which the last symbol of the triggering PDCCH has ended. Here, the detailed value of Z follows the explanation below, $T_c=1/(\Delta f_{max} \cdot N_f)$, $\Delta f=480 \cdot 10^3 Hz$, $N_f=4096$, $\kappa=64$, and $\mu$ is numerology. At this time, $\mu$ may be promised to use the largest $T_{proc,CSI}$ value among $(\mu_{PDCCH}, \mu_{CSI-RS}, \mu_{UL})$, where $\mu_{PDCCH}$ may refer to a subcarrier spacing used for PDCCH transmission, $\mu_{CSI-RS}$ may refer to a subcarrier spacing used for CSI-RS transmission, and $\mu_{UL}$ may refer to a subcarrier spacing of the uplink channel used for uplink control information (UCI) transmission for CSI reporting. In another example, it is possible to promise to use $\mu$, which refers to the largest $T_{proc,CSI}$ value among $(\mu_{PDCCH}, \mu_{UL})$. For the definitions of $\mu_{PDCCH}$ and $\mu_{UL}$, see the description above. For convenience of future explanation, satisfying the above conditions will be referred to as satisfying CSI reporting validity condition 1.

In addition, when the reference signal for channel measurement for the aperiodic CSI report indicated to the UE through DCI is an aperiodic reference signal, the UE may report a valid CSI report starting from an uplink symbol after Z' symbol after the last symbol including the reference signal has ended. The Z' symbol described above may differ according to the numerology of a downlink BWP corresponding to the PDCCH including DCI indicating the CSI report, the numerology of a bandwidth corresponding to the reference signal for channel measurement for the CSI report, the numerology of an uplink BWP corresponding to the PUSCH transmitting the CSI report, and the type or characteristics (report quantity, frequency band granularity, number of ports of a reference signal, codebook type, etc.) of the channel information reported by the CSI report.

In other words, in order for a CSI report to be determined to be a valid CSI report (if the CSI report is to be a valid CSI report), the uplink transmission of the CSI report should not occur before the $Z_{ref'}$ symbol, including timing advance. In this case, the $Z_{ref'}$ symbol is an uplink symbol in which a CP starts after the time $T'_{proc.CSI}=(Z')(2048+144) \cdot \kappa 2^{-\mu} \cdot T_c$ from the moment at which the last symbol of the aperiodic CSI-RS or aperiodic CSI-IM triggered by the triggering PDCCH has ended. Here, the detailed value of Z' follows the explanation below,
$T_c=1/(\Delta f_{max} \cdot N_f)$, $\Delta f......=480 \cdot 10^3 Hz$, $N_f=4096$, $\kappa=64$, and $\mu$ is numerology. At this time, $\mu$ may be promised to use the largest $T_{proc,CSI}$ value among $(\mu_{PDCCH}, \mu_{CSI-RS}, \mu_{UL})$, where $\mu_{PDCCH}$ may refer to a subcarrier spacing used for PDCCH transmission, $\mu_{CSI-RS}$ may refer to a subcarrier spacing used for CSI-RS transmission, and $\mu_{UL}$ may refer to a subcarrier spacing of the uplink channel used for uplink control information (UCI) transmission for CSI reporting. In another example, it is possible to promise to use $\mu$, which refers to the largest $T_{proc,CSI}$ value among $(\mu_{PDCCH}, \mu_{UL})$. For the definitions of $\mu_{PDCCH}$ and $\mu_{UL}$, see the description above. For convenience of future explanation, satisfying the above conditions will be referred to as satisfying CSI reporting validity condition 2.

When the base station provides the UE with an indication of an aperiodic CSI report for an aperiodic reference signal through DCI, the UE may perform a valid CSI report from the first uplink symbol that satisfies both a timepoint after the Z symbol after the last symbol, which is included in a PDCCH including DCI indicating the CSI report, has ended and a timepoint after the Z' symbol after the last symbol including the reference signal has ended. That is, in the case of aperiodic CSI reporting based on an aperiodic reference signal, both CSI reporting validity conditions 1 and 2 should be satisfied to be considered as a valid CSI report.

When the CSI report timepoint indicated by the base station does not satisfy the CSI computation time requirements, the UE may determine the CSI report to be invalid and not consider updating the channel information state for the CSI report.

The Z and Z' symbols for calculating the CSI computation time described above follow Tables 28 and 29 below. For example, when the channel information reported in the CSI report includes only wideband information, the number of ports of the reference signal is equal to or less than 4, the reference signal resource is one, the codebook type is "typeI-SinglePanel", or the type of channel information reported (report quantity) is "cri-RI-CQI", the Z and Z' symbols follow the values of $Z_1$ and $Z_{1'}$ of Table 29. In the future, this will be named delay requirement 2. In addition, when the PUSCH including the CSI report does not include a transport block (TB) or a hybrid automatic repeat request acknowledgment (HARQ-ACK) and the CPU occupation of the UE is 0, the Z and Z' symbols follow the values of $Z_1$ and $Z_{1'}$ of Table 19, and this will be named delay requirement 1. The CPU occupation described above is described in detail below. Additionally, when the report quantity is "cri-RSRP" or "ssb-Index-RSRP", the Z and Z' symbols follow the values of the $Z_3$ and $Z_{3'}$ of Table 20. X1, X2, X3, and X4 of Table 20 refer to a UE capability for beam reporting time, and $K_{B1}$ and $K_{B2}$ of Table 20 refer to a UE capability for beam switching time. When the Z and Z' symbols do not correspond to the type or characteristics of the channel information reported in the CSI report described above, the Z and Z' symbols shall follow the values of $Z_2$ and $Z_{2'}$ of Table 20.

[Table 19]

| μ | $Z_1$ [symbols] | |
| --- | --- | --- |
| | $Z_1$ | $Z'_1$ |
| 0 | 10 | 8 |
| 1 | 13 | 11 |
| 2 | 25 | 21 |
| 3 | 43 | 36 |

[Table 20]

| μ | $Z_1$ [symbols] | | $Z_2$ [symbols] | | $Z_3$ [symbols] | |
| --- | --- | --- | --- | --- | --- | --- |
| | $Z_1$ | $Z'_1$ | $Z_2$ | $Z'_2$ | $Z_3$ | $Z'$ |
| 0 | 22 | 16 | 40 | 37 | 22 | $X_1$ |
| 1 | 33 | 30 | 72 | 69 | 33 | $X_2$ |
| 2 | 44 | 42 | 141 | 140 | min(44, $X_3+KB_1$) | $X_3$ |
| 3 | 97 | 85 | 152 | 140 | min(97, $X_4+KB_2$) | $X_4$ |

When providing the UE with an indication of an aperiodic, semi-persistent, or periodic CSI report, the base station may configure a CSI reference resource to determine reference time and frequency resources for the channel to be reported in the CSI report. The frequency of the CSI reference resource may be carrier and subband information to measure CSI indicated by the CSI report setting, which may correspond to carrier and reportFreqConfiguration of Table 26, respectively. The time of the CSI standard resource may be defined based on a time at which the CSI report is transmitted. For example, when the CSI report #X is indicated to be transmitted by uplink slot n' of the carrier and BWP in which the CSI report is to be transmitted, the time of the CSI reference resource of the CSI report #X may be defined as the downlink slot n-$n_{CSI-ref}$ of the carrier and BWP in which the CSI is measured. Downlink slot n is calculated as

$$n = \left\lfloor n' \cdot 2^{\mu_{DL}}/2^{\mu_{UL}} \right\rfloor$$

when the numerology of the carrier and BWP for measuring CSI is named $\mu_{DL}$, and when the numerology of the carrier and BWP for transmitting CSI report #X is named $\mu_{UL}$. In case that the CSI report #X transmitted in uplink slot n' is a semi-persistent or periodic CSI report, the slot interval $n_{CSI-ref}$ between the downlink slot n and the CSI reference signal follows $n_{CSI-ref}=4 \cdot 2^{\mu_{DL}}$ when a single CSI-RS/SSB resource is connected to the CSI report according to the number of CSI-RS/SSB resources for channel measurement, and the slot interval $n_{CSI-ref}$ follows $n_{CSI-ref}= 5 \cdot 2^{\mu_{DL}}$ when multiple CSI-RS/SSB resources are connected to the CSI report. When the CSI report #X transmitted from the uplink slot n' is an aperiodic CSI report, $n_{CSI\text{-}ref}$ is calculated as $n_{CSI\text{-}ref} = \left\lfloor Z'/N_{symb}^{slot} \right\rfloor$ by considering the CSI computation time Z' for channel measurement. The $N_{symb}^{slot}$ described above is the number of symbols included in one slot, and it is assumed that $N_{symb}^{slot} = 14$ in NR.

When the base station indicates the UE to transmit a predetermined CSI report in uplink slot n' via higher layer signaling or DCI, the UE may report the CSI by performing channel measurement or interference measurement for CSI-RS resources, CSI-IM resources, or SSB resources that have been transmitted no later than the CSI reference resource slot of the CSI report transmitted from uplink slot n' of the CSI-RS resource, CSI-IM resource, or SSB resource associated with the corresponding CSI report. The CSI-RS resource, CSI-IM resource, or SSB resource associated with the corresponding CSI report may refer to the CSI-RS resource, CSI-IM resource, or SSB resource included in the resource set configured in the resource setting referenced by the report setting for the CSI report of the UE configured via higher layer signaling, the CSI-RS resource, CSI-IM resource, or SSB resource referenced by the CSI report trigger state that includes parameters for the corresponding CSI report, or the CSI-RS resource, CSI-IM resource, or SSB resource indicated by the ID of the reference signal (RS) set.

In embodiments of the disclosure, CSI-RS, CSI-IM, and SSB occasions refer to a transmission timepoint of CSI-RS, CSI-IM, and SSB resource(s) determined by higher layer configuration or a combination of higher layer configuration and DCI triggering. In an example, in the case of semi-persistent or periodic CSI-RS resources, a slot to be transmitted is determined according to a slot period and a slot offset configured by higher layer signaling, and transmission symbol(s) within the slot is determined with reference to one of the intra-slot resource mapping methods of Table 25 according to resource mapping information (resourceMapping). In another example, in the case of the aperiodic CSI-RS resource, a slot to be transmitted is determined according to the slot offset with the PDCCH including the DCI indicating channel reporting configured via higher layer signaling, and transmission symbol(s) in the slot is determined by referring to one of the resource mapping methods of Table 25 according to the resource mapping information (resourceMapping).

The CSI-RS occasion described above may be determined by independently considering a transmission timepoint of each CSI-RS resource or by comprehensively considering a transmission timepoint of one or more CSI-RS resource(s) included in the resource set, and accordingly, the following two interpretations are possible for the CSI-RS occasion according to each resource set configuration.

- Interpretation 1-1: From the start timepoint of the earliest symbol in which one specific resource among one or more CSI-RS resources included in the resource set(s) configured in the resource setting referenced by the report setting configured for the CSI report is transmitted to the end timepoint of latest symbol
- Interpretation 1-2: From the start timepoint of the earliest symbol, in which a CSI-RS resource transmitted at the earliest timepoint is transmitted, to the end timepoint of the latest symbol, in which a CSI-RS resource transmitted at the latest point is transmitted, among one or more CSI-RS resources included in the resource set(s) configured in the resource setting referenced by the report setting configured for the CSI report

In the following embodiments of the disclosure, both interpretations of the CSI-RS occasion can be considered and applied individually. In addition, in the case of the CSI-IM occasion and the SSB occasion, it is possible to consider both interpretations, such as the CSI-RS occasion, but since the principle is similar to the above description, redundant descriptions will be omitted below.

In embodiments of the disclosure, "the CSI-RS, CSI-IM, or SSB occasion for CSI report #X transmitted in uplink slot n' refers to the set of CSI-RS occasions, CSI-IM occasions, and SSB occasions, which are not later than the CSI reference resource of the CSI report #X to be transmitted in uplink slot n'", among the CSI-RS resources, CSI-IM resources, and SSB resources included in the resource set configured in the resource setting referenced by the report setting configured for CSI report #X.

In embodiments of the disclosure, "the latest CSI-RS, CSI-IM, or SSB occasion among CSI-RS, CSI-IM, or SSB occasions for CSI report #X transmitted in uplink slot n'" can be interpreted in two ways as follows.

- Interpretation 2-1: A set of occasions including the latest CSI-RS occasion among CSI-RS occasions for CSI report #X transmitted in uplink slot n', the latest CSI-IM occasion among CSI-RS occasions for CSI report #X transmitted in uplink slot n', and the latest SSB occasion among SSB occasions for CSI report #0 transmitted in uplink slot n'
  Interpretation 2-2: The latest occasion among the CSI-RS occasion, CSI-IM occasion, and SSB occasion for CSI report #X transmitted in uplink slot n'

In the following embodiments of the disclosure, it is possible to consider both interpretations for "the latest CSI-RS, CSI-IM, or SSB occasion among CSI-RS, CSI-IM, or SSB occasions for CSI report #X transmitted in uplink slot n'" and apply them individually. In addition, when considering the above-mentioned two interpretations (interpretation 1-1, interpretation 1-2) for CSI-RS occasion, CSI-IM occasion, and SSB occasion, in the embodiments of this disclosure, "the latest CSI-RS, CSI-IM, or SSB occasion among the CSI-RS, CSI-IM, or SSB occasions for CSI report #X transmitted in uplink slot n'" can be applied individually, by considering all four different interpretations (application of interpretation 1-1 and interpretation 2-1, application of interpretation 1-1 and interpretation 2-2, application of interpretation 1-2 and interpretation 2-1, and application of interpretation 1-2 and interpretation 2-2).

The base station may instruct a CSI report by considering the amount of channel information that the UE may simultaneously calculate for the CSI report, that is, the number of channel information calculation units (CSI processing units, CPUs) of the UE. When the number of channel information calculation units that the UE may simultaneously calculate is $N_{CPU}$, the UE does not expect a CSI report instruction from the base station that requires more channel information calculations than $N_{CPU}$, or may not consider the update of channel information requiring more channel information calculations than $N_{CPU}$. $N_{CPU}$ may be reported by the UE to the base station via higher layer signaling or may be configured by the base station via higher layer signaling.

It is assumed that the CSI report instructed by the base station to the UE occupies some or all of the CPU for channel information calculation among the total number $N_{CPUs}$ of channel information that the UE may simultaneously calculate. For each CSI report, for example, when the number of channel information calculation units required for CSI report n (n=0, 1, ..., N-1) is $O_{CPU}^{(n)}$, the number of channel information calculation units required for a total of N CSI reports may be $\sum_{n=0}^{N-1} O_{CPU}^{(n)}$. The channel information calculation unit required for each reportQuantity configured for the CSI report may be configured as shown in Table 21 below.

[Table 21]

- $O_{CPU}^{(n)} = 0$ : A case in which the reportQuantity configured in the CSI report is configured as "none" and trs-Info is configured in a CSI-RS resource set associated with the CSI report

- $O_{CPU}^{(n)} = 1$ : A case in which the reportQuantity configured in the CSI report is configured as "none", "cri-RSRP", "ssb-Index-RSRP", and trs-Info is not configured in the CSI-RS resource set associated with the CSI report
- A case in which the reportQuantity configured in the CSI report is configured as "cri-RI-PMI-CQI", "cri-RI-i1", "cri-RI-i1-CQI", "cri-RI-CQI", or "cri-RI-LI-PMI-CQI"

>> $O_{CPU}^{(n)} = N_{CPU}$ : A case in which an aperiodic CSI report is triggered and the corresponding CSI report is not multiplexed with one or both of TB / HARQ-ACK. A case in which the CSI report is wideband CSI and corresponds to a maximum of 4 CSI-RS ports, and in case of a single resource without a CRI report, the codebookType corresponds to "typeI-SinglePanel" or the reportQuantity corresponds to "cri-RI-CQI".

(This case corresponds to delay requirement 1 described above, and may be considered as a case in which the UE uses all available CPUs to quickly calculate and report the CSI)

>> $O_{CPU}^{(n)} = K_s$ : All cases except the above cases. $K_s$ indicates the number of CSI-RS resources in the CSI-RS resource set for channel measurement

When the number of channel information calculations required by the UE for multiple CSI reports at a specific timepoint is greater than the number $N_{CPUs}$ of channel information calculation units that the UE may simultaneously calculate, the UE may not consider updating channel information for some CSI reports. Among the multiple indicated CSI reports, the CSI report that does not consider the update of channel information is determined by considering at least the time during which the calculation of the channel information required for the CSI report occupies the CPU and the priority of the channel information to be reported. For example, it is possible not to consider the update of channel information for a CSI report that starts at the latest time when the calculation of the channel information required for the CSI report occupies the CPU, and it is possible not to preferentially consider the update of channel information for a CSI report having a low priority of channel information.

The priority of the channel information may be determined by referring to Table 22 below.

[Table 22]

CSI priority value $Pri_{iCSI}(y, k, c, s) = 2 \cdot N_{cells} \cdot M_s \cdot y + N_{cells} \cdot M_s \cdot k + M_s \cdot c + s$, - y = 0 in case that an aperiodic CSI report is transmitted through PUSCH, y = 1 in case that a semi-persistent CSI report is transmitted through PUSCH, y = 2 in case that a semi-persistent CSI report is transmitted through PUCCH, y = 3 in case that a periodic CSI report is transmitted through PUCCH;

- k=0 in case that CSI report includes L1-RSRP, k=1 in case that the CSI report does not include L1-RSRP;

- c: serving cell index, $N_{cells}$: maximum number of serving cells configured via higher layer signaling (maxNrofServingCells);

- s: CSI report configuration index (reportConfigID), $M_s$ : Maximum number of CSI report configurations configured via higher layer signaling (maxNrofCSI-ReportConfigurations).

The CSI priority for the CSI report is determined through the priority value $Pri_{iCSI}$ (y, k, c, s) of Table 22. Referring to Table 31, the CSI priority value is determined according to the type of channel information included in the CSI report, the time domain reporting characteristics of the CSI report (aperiodic, semi-persistent, periodic), the channel on which the CSI report is transmitted (PUSCH, PUCCH), a serving cell index, and a CSI report configuration index. The CSI priority for the CSI report compares the priority value $Pri_{iCSI}$(y, k, c, s) and determines that the CSI report with a small priority value has a high CSI priority.

When the time during which the CPU is occupied by the calculation of the channel information required for the CSI report that the base station instructs to the UE is called the CPU occupation time, the CPU occupation time is determined by considering the type of channel information included in the CSI report (report quantity), the time-domain characteristics of the CSI report (aperiodic, semi-persistent, periodic), the slot or symbol occupied by the slot or symbol occupied by higher layer signaling or DCI that instructs the CSI report, and a part or all of the slot or symbol occupied by the reference signal for measuring the channel state.

Combinations between CSI reporting settings and CSI resource settings may be supported based on Table 23 below.

[Table 23]

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.32 1]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.32 1]; for reporting on PUSCH, the UE receives triggering on DCI | Triggered by DCI; additionally, activation command [10, TS 38.321] possible as defined in Subclause 5.2.1.5. 1. |
| Aperiodic CSI-RS | Not Supported | Not Supported | Triggered by DCI; additionally, activation command [10, TS 38.321] possible as defined in Subclause 5.2.1.5.1. |

FIG. 6 illustrates an example of an aperiodic CSI reporting method.

In an embodiment 600 of FIG. 6, a UE may acquire DCI format 0_1 by monitoring a PDCCH 601, and may acquire scheduling information and CSI request information for a PUSCH 605 therefrom. The UE may acquire resource information for a CSI-RS 602 to be measured from the received CSI request indicator. The UE may determine a time point at which the CSI-RS 602 resource to be transmitted should be measured, based on a time point at which DCI format 0_1 is received and the CSI resource set configuration (e.g., a parameter (the above described aperiodicTriggeringOffset) with regard to an offset in the NZP CSI-RS resource set configuration (NZP-CSI-RS-ResourceSet)). More specifically, the UE may receive configuration of the offset value X of the parameter aperiodicTriggeringOffset in the NZP-CSI-RS resource set configuration by higher layer signaling from the base station, and the configured offset value X may denote an offset between a slot in which DCI for triggering aperiodic CSI reporting and a slot in which the CSI-RS resource is transmitted. For example, the aperiodicTriggeringOffset parameter value and the offset value X may have a mapping relationship described in Table 24 below.

[Table 24]

| aperiodic Triggering Offset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

In the example 600 of FIG. 6 shows an example in which the offset value described above is configured as X=0. Here, the UE may receive the CSI-RS 602 in a slot (corresponding to slot 0 606 in FIG. 6 ) in which DCI format 0_1 for triggering aperiodic CSI reporting is received, and may report CSI information, which is measured using the received CSI-RS, to the base station through the PUSCH 605. The UE may acquire scheduling information for the PUSCH 605 for CSI reporting (pieces of information corresponding to each field of the DCI format 0_1 described above) from DCI format 0_1. For example, in DCI format 0_1, the UE may acquire information about a slot in which the PUSCH 605 is to be transmitted, from the above described time domain resource allocation information for the PUSCH 605. In an example of FIG. 6, the UE has acquired K2 value corresponding to the slot offset value for the PDCCH-to-PUSCH as 3, and accordingly, the PUSCH 605 may be transmitted at a time when the PDCCH 601 has been received, that is, in slot 3 609 which is three slots away from slot 0 606.

In an example 610 of FIG. 6, the UE may acquire DCI format 0_1 by monitoring a PDCCH 611, and may acquire scheduling information and CSI request information relating to a PUSCH 615 therefrom. The UE may acquire resource information for the CSI-RS 612 to be measured from the received CSI request indicator. In an example 610 of FIG. 6, an example is shown in which the offset value for the aforementioned CSI-RS is configured as X=1. Here, the UE may receive a CSI-RS 612 in a slot (corresponding to slot 0 616 of FIG. 6) in which DCI format 0_1 for triggering aperiodic CSI reporting is received, and may report the CSI information measured using the received CSI-RS to the base station through the PUSCH 615.

The aperiodic CSI report may include at least one or both of CSI part 1 or CSI part 2 and, when the aperiodic CSI report is transmitted via a PUSCH, the aperiodic CSI report may be multiplexed with TB. For multiplexing, CRC is inserted to an input bit of the aperiodic CSI, encoded and rate-matched, and then mapped to a specific pattern in an RE in a PUSCH and transmitted. The CRC insertion may be skipped depending on the coding method or the length of the input bit. The number of modulation symbols calculated for rate matching when multiplexing CSI Part 1 or CSI Part 2 included in aperiodic CSI report may be calculated as follows.

For CSI part 1 transmission on PUSCH not using repetition type B with UL-SCH, the number of coded modulation symbols per layer for CSI part 1 transmission, denoted as $Q'_{\text{CSI-part1}}$ , is determined as follows:

$$Q'_{\text{CSI}-1} = \min\left\{ \left\lceil \frac{(O_{\text{CSI}-1}+L_{\text{CSI}-1})\cdot\beta_{\text{offset}}^{\text{PUSCH}}\cdot\sum_{l=0}^{N_{\text{symb,all}}^{\text{PUSCH}}-1} M_{\text{sc}}^{\text{UCI}}(l)}{\sum_{r=0}^{C_{UL-SCH}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$ , is determined as follows:

(continued)

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}} \cdot \sum_{l=0}^{N_{\text{symb,nominal}}^{\text{PUSCH}}-1} M_{\text{sc,nominal}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,nominal}}^{\text{PUSCH}}-1} M_{\text{sc,nominal}}^{\text{UCI}}(l) \right\rceil \right.$$

$$\left. - Q'_{ACK/CG-UCI}, \sum_{l=0}^{N_{\text{symb,actual}}^{\text{PUSCH}}-1} M_{\text{sc,actual}}^{\text{UCI}}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{\text{CSI-part1}}$, is determined as follows:

if there is CSI part 2 to be transmitted on the PUSCH,

$$Q'_{\text{CSI-1}} = \min\left\{ \left\lceil \frac{(O_{\text{CSI-1}} + L_{\text{CSI-1}}) \cdot \beta_{\text{offset}}^{\text{PUSCH}}}{R \cdot Q_m} \right\rceil, \sum_{l=0}^{N_{\text{symb,all}}^{\text{PUSCH}}-1} M_{\text{sc}}^{\text{UCI}}(l) - Q'_{\text{ACK}} \right\}$$

else

$$Q'_{\text{CSI-1}} = \sum_{l=0}^{N_{\text{symb,all}}^{\text{PUSCH}}-1} M_{\text{sc}}^{\text{UCI}}(l) - Q'_{\text{ACK}}$$

end if

...

For CSI part 2 transmission on PUSCH not using repetition type B with UL-SCH, the number of coded modulation symbols per layer for CSI part 2 transmission, denoted as $Q'_{\text{CSI-part2}}$, is determined as follows:

$$Q'_{\text{CSI-2}} = \min\left\{ \left\lceil \frac{(O_{\text{CSI-2}} + L_{\text{CSI-2}}) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{UL-SCH}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{ACK/CG-UCI} - Q'_{\text{CSI-1}} \right\}$$

For CSI part 2 transmission on an actual repetition of a PUSCH with repetition Type B with UL-SCH, the number of coded modulation symbols per layer for CSI part 2 transmission, denoted as $Q'_{\text{CSI-part2}}$, is determined as follows:

$$Q'_{\text{CSI-2}} = \min\left\{ \left\lceil \frac{(O_{\text{CSI-2}} + L_{\text{CSI-2}}) \cdot \beta_{\text{offset}}^{\text{PUSCH}} \cdot \sum_{l=0}^{N_{\text{symb,nominal}}^{\text{PUSCH}}-1} M_{\text{sc,nominal}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,nominal}}^{\text{PUSCH}}-1} M_{\text{sc,nominal}}^{\text{UCI}}(l) \right\rceil \right.$$

$$\left. - Q'_{ACK/CG-UCI} - Q'_{\text{CSI-1}}, \sum_{l=0}^{N_{\text{symb,actual}}^{\text{PUSCH}}-1} M_{\text{sc,actual}}^{\text{UCI}}(l) - Q'_{ACK/CG-UCI} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N_{\text{symb,all}}^{\text{PUSCH}}-1} M_{\text{sc}}^{\text{UCI}}(l) - Q'_{\text{ACK}} - Q'_{\text{CSI-1}}$$

In particular, in the case of PUSCH repeated transmission methods A and B, the UE may multiplex and transmit the aperiodic CSI report only in the first repeated transmission among PUSCH repeated transmissions. This is because the aperiodic CSI reporting information that is multiplexed is encoded using a polar code method, and in this case, in order to be multiplexed when multiple PUSCH repetitions are transmitted, each PUSCH repetition should have the same frequency and time resource allocation. In particular, in the case of PUSCH repeated transmission method B, each actual repetition may have a different OFDM symbol length, and thus the aperiodic CSI report may be multiplexed and transmitted only for the first PUSCH repetition.

In addition, for PUSCH repeated transmission method B, when the UE schedules aperiodic CSI reporting with no scheduling for TB or receives DCI that activates semi-periodic CSI reporting, the value of nominal repetition may be assumed to be 1 even if the number of PUSCH repeated transmissions configured by higher layer signaling is greater than 1. In addition, when the UE schedules or activates aperiodic or semi-persistent CSI reporting with no scheduling for the TB, based on the PUSCH repeated transmission method B, the UE may expect that the first nominal repetition is the same as the first actual repetition. After semi-persistent CSI reporting has been activated by DCI, for a PUSCH transmitted by including semi-persistent CSI based on the PUSCH repetition transmission method B with no scheduling for DCI, when the first nominal repetition is different from the first actual repetition, transmission for the first nominal repetition may be ignored.

[PUSCH: regarding transmission scheme]

Next, a PUSCH transmission scheduling scheme will be described. PUSCH transmission may be dynamically scheduled by an uplink grant (UL grant) within DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 25 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 25 through higher signaling. If PUSCH transmission is operated by a configured grant, parameters applied to the PUSCH transmission are applied through configuredGrantConfig (higher signaling) in Table 25 except for dataScramblingIdentityPUSCH, txConfig, codebookSubset, maxRank, and scaling of UCI-OnPUSCH, which are provided by pusch-Config (higher signaling) in Table 26. If provided with transformPrecoder inside configuredGrantConfig (higher signaling) in Table 25, the UE applies tp-pi2BPSK inside pusch-Config in Table 26 to PUSCH transmission operated by a configured grant.

[Table 25]

| | |
|---|---|
| ConfiguredGrantConfig ::= | SEQUENCE { |
| frequencyHopping | ENUMERATED {intraSlot, interSlot} OPTIONAL, -- Need S, |
| cg-DMRS-Configuration | DMRS-UplinkConfig, |
| mcs-Table | ENUMERATED {qam256, qam64LowSE} OPTIONAL, -- Need S |
| mcs-TableTransformPrecoder | ENUMERATED {qam256, qam64LowSE} OPTIONAL, -- Need S |

```
        uci-OnPUSCH                          SetupRelease { CG-UCI-OnPUSCH }
OPTIONAL,      -- Need M
        resourceAllocation                   ENUMERATED { resourceAllocationType0,
resourceAllocationType1, dynamicSwitch },
        rbg-Size                             ENUMERATED {config2}
OPTIONAL,      -- Need S
        powerControlLoopToUse                ENUMERATED {n0, n1},
        p0-PUSCH-Alpha                       P0-PUSCH-AlphaSetId,
        transformPrecoder                    ENUMERATED {enabled, disabled}
OPTIONAL,      -- Need S
        nrofHARQ-Processes                   INTEGER(1..16),
        repK                                 ENUMERATED {n1, n2, n4, n8},
        repK-RV                              ENUMERATED {s1-0231, s2-0303, s3-
0000}                                        OPTIONAL,      -- Need R
        periodicity                          ENUMERATED {
                                                 sym2,     sym7,     sym1x14,
sym2x14, sym4x14, sym5x14, sym8x14, sym10x14, sym16x14, sym20x14,
                                                 sym32x14,          sym40x14,
sym64x14, sym80x14, sym128x14, sym160x14, sym256x14, sym320x14, sym512x14,
                                                 sym640x14,        sym1024x14,
sym1280x14, sym2560x14, sym5120x14,
                                                 sym6,     sym1x12,  sym2x12,
sym4x12, sym5x12, sym8x12, sym10x12, sym16x12, sym20x12, sym32x12,
                                                 sym40x12,          sym64x12,
sym80x12, sym128x12, sym160x12, sym256x12, sym320x12, sym512x12, sym640x12,
                                                 sym1280x12, sym2560x12
        },
        configuredGrantTimer                          INTEGER  (1..64)
OPTIONAL,      -- Need R
        rrc-ConfiguredUplinkGrant            SEQUENCE {
            timeDomainOffset                 INTEGER (0..5119),
```

```
          timeDomainAllocation                    INTEGER   (0..15),

          frequencyDomainAllocation               BIT STRING (SIZE(18)),

          antennaPort                             INTEGER (0..31),

          dmrs-SeqInitialization                              INTEGER   (0..1)
OPTIONAL,     -- Need R

          precodingAndNumberOfLayers              INTEGER (0..63),

          srs-ResourceIndicator                               INTEGER   (0..15)
OPTIONAL,     -- Need R

          mcsAndTBS                               INTEGER (0..31),

          frequencyHoppingOffset                              INTEGER   (1..
maxNrofPhysicalResourceBlocks-1)               OPTIONAL,     -- Need R

          pathlossReferenceIndex                  INTEGER  (0..maxNrofPUSCH-
PathlossReferenceRSs-1),

          ...

      }
OPTIONAL,     -- Need R

      ...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 26, which is higher signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 26]

| | |
|---|---|
| PUSCH-Config ::= | SEQUENCE { |
| dataScramblingIdentityPUSCH | INTEGER (0..1023) |
| OPTIONAL, -- Need S | |
| txConfig | ENUMERATED {codebook, |
| nonCodebook} | OPTIONAL, -- Need S |
| dmrs-UplinkForPUSCH-MappingTypeA | SetupRelease { DMRS- |
| UplinkConfig } | OPTIONAL, -- Need M |
| dmrs-UplinkForPUSCH-MappingTypeB | SetupRelease { DMRS- |
| UplinkConfig } | OPTIONAL, -- Need M |
| | |
| pusch-PowerControl | PUSCH-PowerControl |
| OPTIONAL, -- Need M | |
| frequencyHopping | ENUMERATED {intraSlot, interSlot} |
| OPTIONAL, -- Need S | |
| frequencyHoppingOffsetLists | SEQUENCE (SIZE (1..4)) OF |
| INTEGER (1.. maxNrofPhysicalResourceBlocks-1) | |
| | |
| OPTIONAL, -- Need M | |
| resourceAllocation | ENUMERATED |
| { resourceAllocationType0, resourceAllocationType1, dynamicSwitch}, | |
| pusch-TimeDomainAllocationList | SetupRelease { PUSCH- |
| TimeDomainResourceAllocationList } | OPTIONAL, -- Need M |
| pusch-AggregationFactor | ENUMERATED { n2, n4, n8 } |
| OPTIONAL, -- Need S | |

|  |  |
|---|---|
| mcs-Table | ENUMERATED {qam256, qam64LowSE} OPTIONAL, -- Need S |
| mcs-TableTransformPrecoder | ENUMERATED {qam256, qam64LowSE} OPTIONAL, -- Need S |
| transformPrecoder | ENUMERATED {enabled, disabled} OPTIONAL, -- Need S |
| codebookSubset | ENUMERATED {fullyAndPartialAndNonCoherent, partialAndNonCoherent,nonCoherent} OPTIONAL, -- Cond codebookBased |
| maxRank | INTEGER (1..4) OPTIONAL, -- Cond codebookBased |
| rbg-Size | ENUMERATED { config2} OPTIONAL, -- Need S |
| uci-OnPUSCH | SetupRelease { UCI-OnPUSCH} OPTIONAL, -- Need M |
| tp-pi2BPSK | ENUMERATED {enabled} OPTIONAL, -- Need S |
| ... |  |
| } |  |

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (higher signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. The TPMI and the transmission rank may be given through "precoding information and number of layers" (a field inside DCI) or configured through precodingAndNumberOfLayers (higher signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission may be selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (higher signaling) will be configured as "fullyAndPartialAndNonCoherent". In addition, if the UE reported "nonCoherent" as UE capability, UE does not expect that the value of codebookSubset (higher signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (higher signaling) is "codebook", and one SRS resource may be indicated through an SRI inside the corresponding SRS resource set. If multiple SRS resources are configured inside the SRS resource set wherein the value of usage inside SRS-ResourceSet (higher signaling) is "codebook", the UE expects that the value of nrofSRS-Ports inside SRS-Resource (higher signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI may be used as information for selecting the index of one SRS resource, and may be included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field within DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

In the following description of the disclosure, higher layer signaling may refer to signaling corresponding to at least one signaling among the following signaling, or a combination of one or more thereof.

- MIB
- SIB or SIB X (X=1, 2,...)
- RRC signaling
- MAC CE
- UE capability reporting
- UE assistance information or message

In addition, L1 signaling may refer to signaling corresponding to at least one signaling method among signaling methods using the following physical layer channels or signaling, or a combination of one or more thereof.

- PDCCH
- DCI
- UE-specific DCI
- Group common DCI
- Common DCI
  Scheduling DCI (for example, DCI used for the purpose of scheduling downlink or uplink data)
- Non-scheduling DCI (for example, DCI not used for the purpose of scheduling downlink or uplink data)
- PUCCH
- DCI

<First embodiment: Subband channel state information reporting method>

In an example of the disclosure, a method for reporting subband channel state information in a wireless communication system is described. In case that the UE performs subband channel state information reporting, the UE may receive from a base station, semi-statistically, a configuration regarding the channel state information of a subband that the UE reports via the csi-ReportingBand configured in CSI-ReportConfig, which is higher layer signaling defined in Table 17 above.

- csi-ReportingBand, which is higher layer signaling, is not configured when the size of the BWP is less than 24 PRB, and may be configured when the size of the BWP is equal to or greater than 24 PRB.
- csi-ReportingBand, which is higher layer signaling, may be selected as one of the bitmaps having a length of 3 to 19, and the length of the bitmap may be determined by the relationship between the size of the subband indicated by each bit in the bitmap and the size of the BWP, which will be described later.
- The size of the subband indicated by each bit in the bitmap may be selected as one of value1 and value2 depending on subbandSize, which is higher layer signaling, and value1 and value2 may be varied depending on the size of the BWP, that is, the total number of RBs of the BWP. For example, when the total number of RBs of the BWP is 24 to 72, value1 and value2 may be 4 and 8 PRBs, respectively, when the total number of RBs of the BWP is 73 to 144, value1 and value2 may be 8 and 16 PRBs, respectively, and when the total number of RBs of the BWP is 145 to 275, value1 and value2 may be 16 and 32 PRBs, respectively.
- When the size of the BWP is 24 PRBs, the number of subbands that may be expressed in the case of 8 PRBs with value 2 is 3, when the size of the BWP is 72 PRBs, the number of subbands that may be expressed in the case of 4 PRBs with value1 is 18, and when the size of the BWP is 275 PRBs, the number of subbands that may be expressed in the case of 16 PRBs with value1 may be 18 if the starting CRB value of the BWP is divided by the size of the subband, and may be 19 if the starting CRB value of the BWP is not divided by the size of the subband. Accordingly, the bitmap can have a length from a minimum of 3 to a maximum of 19, one of which may be selected.
- A bit at a predetermined position in the bitmap may have a bit value of 0 or 1, and when the value of a bit at a predetermined position in the bitmap is 1, this may mean that the UE should report subband channel state information for the corresponding subband. As each bit in the bitmap has a value of 0 or 1, the UE may report subband channel state information for a set of continuous or discontinuous subbands in the BWP.
- When the UE is configured to report wideband PMI and CQI via higher layer signaling, the UE may calculate the wideband PMI and CQI by considering all subbands corresponding to the value of 1 in the bitmap and report the same to the base station. In case that the UE is configured to report subband PMI and CQI via higher layer signaling, the UE may calculate the subband PMI and CQI for each subband corresponding to the value of 1 in the bitmap and report the same to the base station.

When the UE is configured to report subband PMI and CQI via higher layer signaling, and the channel state information report is divided into two parts (two-part CSI), the UE may include subband channel state information in the second part of the channel state information (CSI part 2), and the sequence of the included information may be as follows.

- Differential CQI of each subband for the second TB with respect to even-numbered subbands, the even-numbered subbands are sorted in ascending order
- PMI of each subband for the second TB with respect to even-numbered subbands, the even-numbered subbands are sorted in ascending order
- Differential CQI of each subband for the second TB with respect to odd-numbered subbands, the odd-numbered subbands are sorted in ascending order
- PMI of each subband for the second TB with respect to odd-numbered subbands, the odd-numbered subbands are sorted in ascending order

In order to generate such information, there may be two methods for determining indices for subbands to distinguish between even and odd subbands as follows.

[Indexing method 1] Index determination method based on value of "1" in a bitmap

- When determining the index of a subband, the UE may determine the index of a subband, based on the values of "1" in the csi-ReportingBand bitmap described above. Therefore, when different UEs are configured with csi-Reporting-Band bitmaps of the same length, and the values of the two bitmaps are different, index of the subband used by the two UEs to report channel state may be assigned differently according to the values of "1" even if they are the same bit position in the two bitmaps. Accordingly, even-numbered and odd-numbered subbands may also differ depending on the bitmap.
- In an example, when the csi-ReportingBand bitmap having a length of 10 is "1110111011", the UE may determine, as subband 0, a subband corresponding to the rightmost "1" in the bitmap since the subband corresponds to the subband of lowest frequency, and may assign subband indices to the subbands corresponding to the remaining "1" in sequence. In this case, the UE may assign subband indices to the position of "1" in the bitmap from right to left in ascending order. Therefore, according to the bitmap, eight subband indices from subbands 0 to 7 may be assigned to the subband corresponding to "1" in the bitmap, and there may be no corresponding subband index for the subbands corresponding to the two "0" bits in the middle.

[Indexing method 2] Index determination method based on the absolute position of bits in a bitmap

- When determining the index of a subband, the UE may determine the index of the subband based on the absolute position of the bits in the csi-ReportingBand bitmap described above. Therefore, when different UEs are configured with csi-ReportingBand bitmaps of the same length, and even if the values of the two bitmaps are different, when the same bit position in the two bitmaps has a value of "1", two UEs may be assigned the same subband index in subbands corresponding to bits of the corresponding position. Accordingly, the even-numbered and odd-numbered subbands are already determined regardless of the bitmap, and whether to report the channel state information for a predetermined subband may be determined according to a value of "1" of the bitmap.
- For example, when the csi-ReportingBand bitmap having a length of 10 is "1110111011", the index of the subband is determined based on the absolute position of the bit in the bitmap, and thus the subband with the lowest frequency band corresponds to the rightmost bit in the bitmap and the subband is determined as subband 0. Thereafter, the subband index is sequentially assigned to the corresponding subband in ascending order. In this example, the UE may perform subband channel state reporting for subbands 0, 1, 3, 4, 5, 7, 8, and 9. The UE may also assign subband indices 2 and 6 to the two "0" bit positions in the middle, but the subband corresponding to "0" is not used for reporting subband channel state information.
- The specific examples of indexing methods 1 and 2 above are only examples, and at least one obvious variant is possible, such as subband index being assigned in descending order, index being assigned starting from a subband with the highest frequency band, or index being assigned starting from a subband corresponding to the leftmost "1" in the bitmap.

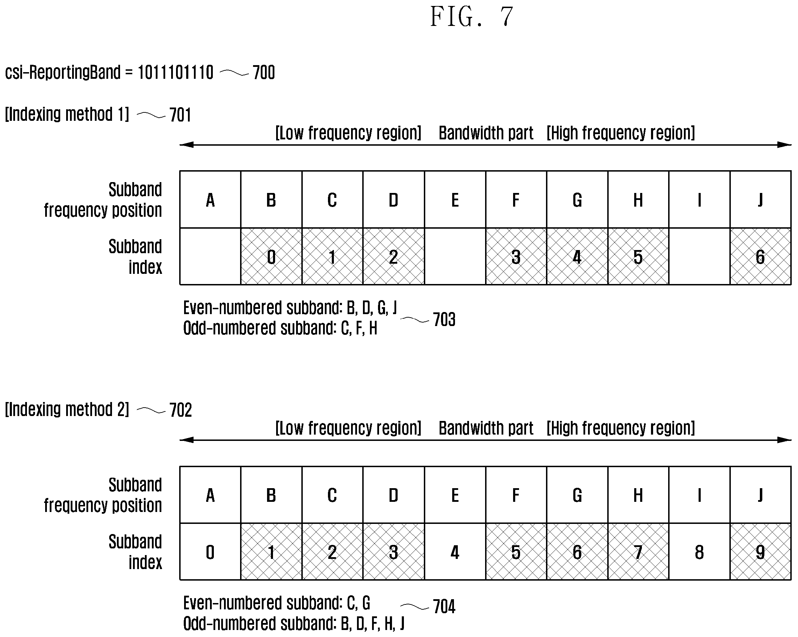

FIG. 7 illustrates an example of a method of assigning a subband index when reporting subband channel state information according to the disclosure. In FIG. 7, the csi-Reporting bitmap may be assumed to be configured as "1011101110" (indicated by reference numeral 700). For the corresponding bitmap, according to [Indexing method 1] (indicated by reference numeral 701), the index of the subband is determined based only on the position in the bitmap to which a value of "1" is assigned, and thus the even-numbered subbands may be determined as B, D, G, and J, and the odd-numbered subbands may be determined as C, F, and H (indicated by reference numeral 703). On the other hand, according to [Indexing method 2] (indicated by reference numeral 702), the index of the subband is determined based on the absolute position of a bit in the bitmap regardless of a value of "1" or "0", and thus the even-numbered subbands may be determined as C and G and the odd-numbered subbands may be determined as B, D, F, H, and J (indicated by reference numeral 704). Here, A to J represent the frequency positions of the subband within the BWP. For example, when the size of the BWP is 80 PRB and the size of the subband is determined to be 8 PRB via higher layer signaling, A may represent the frequency range of PRB 0 to PRB 7, and J may represent the frequency range of PRB 72 to PRB 79.

According to the description above, even if the UE has been configured with the csi-ReportingBand bitmap, which is higher layer signaling, subband index allocation may differ depending on which indexing method is used, and accordingly, the even and odd subbands may differ accordingly. Therefore, when reporting the subband channel state information described above, information on the even-numbered and odd-numbered subbands may be assigned differently and reported to the base station. In particular, when the UE generates subband channel state reporting information using [Indexing method 1] and the base station decodes and interprets the subband channel state reporting information reported from the UE based on [Indexing method 2], a situation may occur in which there is a mismatch in understanding between the base station and the UE regarding subband channel state reporting information.

<Second Embodiment: Another method for subband channel state information reporting>

According to an embodiment of the disclosure, when at least one entity of a base station and a UE uses different indexing methods to determine a subband index, various methods are described to ensure a consistent understanding of subband channel state information, even when different entities use different indexing methods within a given BWP, by restricting the CSI-ReportingBand bitmap configuration. Basically, the following various methods may be used to make the indices assigned to the subbands themselves the same, or to make the even-numbered and odd-numbered subbands, which serve as the basis for reporting the subband channel state information, the same even though the subband indices are different.

Therefore, the base station may use the following methods to configure a bitmap so as to allow the base station and the UE to use the bitmap for subband channel state reporting, based on the same subband indexing. In addition, the UE may use the following methods to expect to receive a bitmap configuration so that the base station and the UE to use the bitmap to report subband channel state information, based on the same subband indexing.

Additionally, the base station may use the following methods to configure a bitmap for the UE so that the base station and the UE may use the same even-numbered and odd-numbered subbands to perform subband channel state reporting.

Additionally, the UE may use the following methods to expect to receive a bitmap configuration so that the base station and the UE may use the same even-numbered and odd-numbered subbands to perform subband channel state reporting.

In addition, the base station may use the following methods to configure a bitmap for the UE so that the base station and the UE use the same even-numbered and odd-numbered subbands to perform subband channel state reporting, even if the base station and the UE have different understanding of the subband index.

In addition, the UE may use the following methods to expect to receive a bitmap configuration so that the base station and the UE use the same even-numbered and odd-numbered subbands to perform subband channel state reporting, even if the base station and the UE have a different understanding of the subband index.

[Bitmap configuration method 1]

The base station may not know whether the base station and a UE have the same or different understanding of a subband index determination method. Therefore, the base station may configure a csi-ReportingBand bitmap in which all bits have a value of "1" for the UE. Since the UE may not know whether the base station and the UE have the same or different understanding of a subband index determination method, the UE may expect to receive a csi-ReportingBand bitmap configured with all bits as "1" from the base station. Accordingly, the UE may expect that the base station and the UE have the same understanding of the subband index.

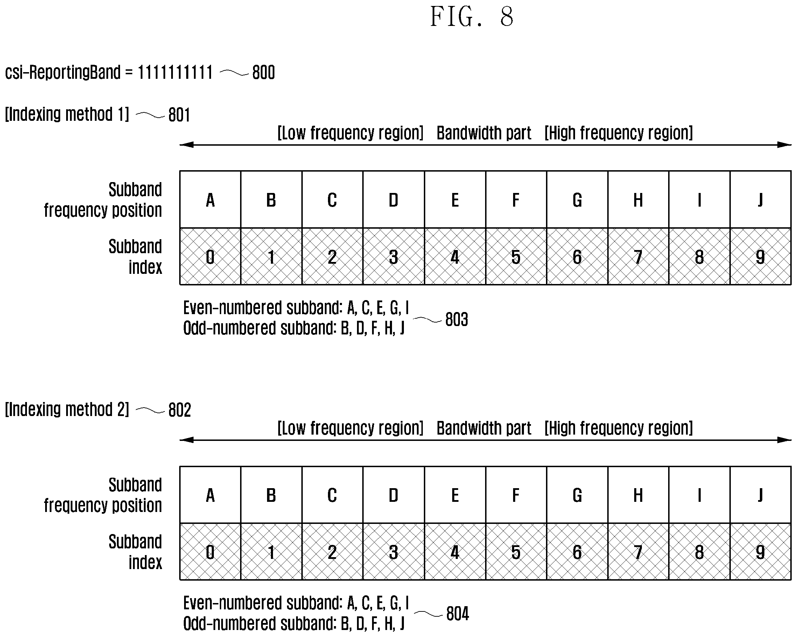

FIG. 8 illustrates an example of a method capable of deriving the same operation in different subband channel state information reporting methods according to the disclosure. In FIG. 8, the csi-Reporting bitmap may be assumed to be configured as 1111111111 (indicated by reference numeral 800). For the corresponding bitmap, according to [Indexing method 1] (indicated by reference numeral 801), the index of the subband is determined only based on the position in which a value of "1" is assigned, and thus the even-numbered subbands may be determined as A, C, E, G, and I, and the odd-numbered subbands may be determined as B, D, F, H, and J (indicated by reference numeral 803). In addition, according to [Indexing method 2] (indicated by reference numeral 802), the index of the subband is determined based on the absolute position of a bit in the bitmap regardless of a value of "1" or "0", and thus the even-numbered subbands may be determined as A, C, E, G, and I, and the odd-numbered subbands may be determined as B, D, F, H, and J (indicated by reference numeral 804).

Since all bits in the bitmap have a value of "1", the subband index for a specific subband may be configured to be the same regardless of whether [Indexing method 1], which determines the index of the subband based on relative position, or [Indexing method 2], which determines the index based on absolute position, and the understanding of the UE and base station for the even-numbered and odd-numbered subband indices may also be the same.

[Bitmap configuration method 2]

A base station may not know whether the base station and a UE have the same or different understanding of a subband index determination method. Therefore, the base station may configure, for the UE, a bitmap that has a value of consecutive "1"s from the rightmost bit for a CSI-ReportingBand bitmap. Since the UE may not know whether the base station and the UE have the same or different understanding of a subband index determination method, the UE may expect to receive the csi-ReportingBand bitmap having a value of consecutive "1"s from the rightmost bit from the base station.

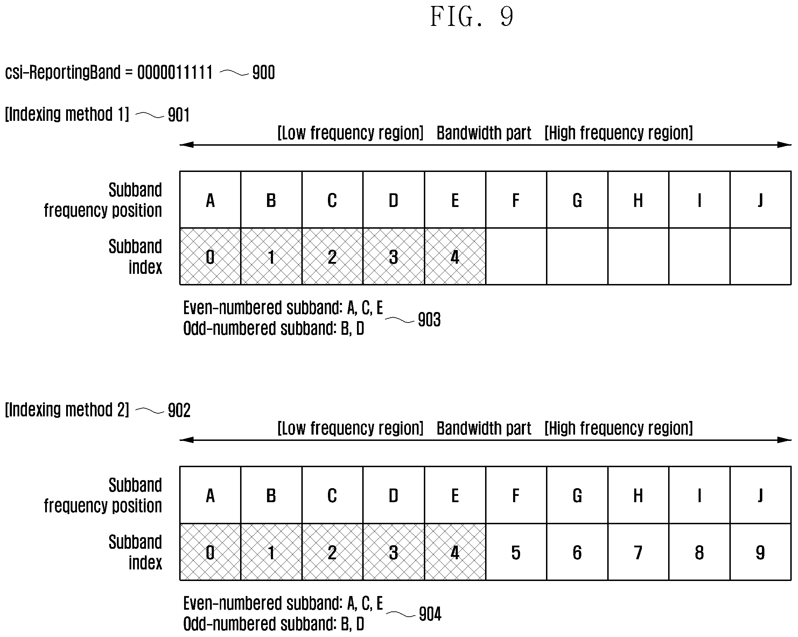

FIG. 9 illustrates another example of a method capable of deriving the same operation in different subband channel state information reporting methods according to the disclosure. In FIG. 9, the csi-Reporting bitmap may be assumed to be configured as 0000011111 (indicated by reference numeral 900). For the corresponding bitmap, according to [Indexing method 1] (indicated by reference numeral 901), the index of the subband is determined only based on the position in which a value of "1" is assigned, and thus the even-numbered subbands may be determined as A, C, and E, and the odd- numbered subbands may be determined as B and D (indicated by reference numeral 903). In addition, according to [Indexing method 2] (indicated by reference numeral 902), the index of the subband is determined based on the absolute position of a bit in the bitmap regardless of a value of "1" or "0", and thus the even-numbered subbands may be determined as A, C, E, and the odd-numbered subbands may be determined as B and D (indicated by reference numeral 904).

In the bitmap, all consecutive bits from the rightmost bit have a value of "1", the subband index for a specific subband may be configured to be the same regardless of whether [Indexing method 1], which determines the index of the subband based on relative position, or [Indexing method 2], which determines the index based on absolute position, and the understanding of the UE and base station for the even-numbered and odd-numbered subband indices may also be the same.

[Bitmap configuration method 3]

A base station may not know whether the base station and a UE have the same or different understanding of a subband index determination method. Therefore, with respect to a CSI-ReportingBand bitmap to be transmitted to the UE, the base station may configure an even number of consecutive "0"s at the rightmost bit position of the bitmap so that the lowest subband for which the corresponding bit is configured as "1" is to the even-numbered subband, and may configure consecutive "1"s at bit positions at the left from the bit position. The UE may expect to receive, from the base station, the csi-ReportingBand bitmap configured such that the lowest subband is the even-numbered subband. In other words, the UE may expect to receive, from the base station, the csi-ReportingBand bitmap that is configured to have an even number of consecutive "0"s at the rightmost bit position and consecutive "1"s at at bit positions at the left from the bit position.

Accordingly, this method allows the UE to expect to have the same understanding with the base station for the even- and odd-numbered subbands when interpreting the csi-ReportingBand bitmap based on [Indexing method 1] and [Indexing method 2]. In addition, when the UE receives from the base station the configuration of csi-ReportingBand bitmap, if the bitmap is interpreted based on [Indexing method 1] and [Indexing method 2], the UE may expect that the even-numbered subbands have the same frequency position and the odd-numbered subbands have the same frequency position regardless of a method to be used. The UE may expect to receive, from the base station, the csi-ReportingBand bitmap configured such that the bit position of "1" that appears first from the right side of the bitmap is configured to be at the odd-numbered bit position, such as the first, third, fifth, etc., from the right side of the bitmap.

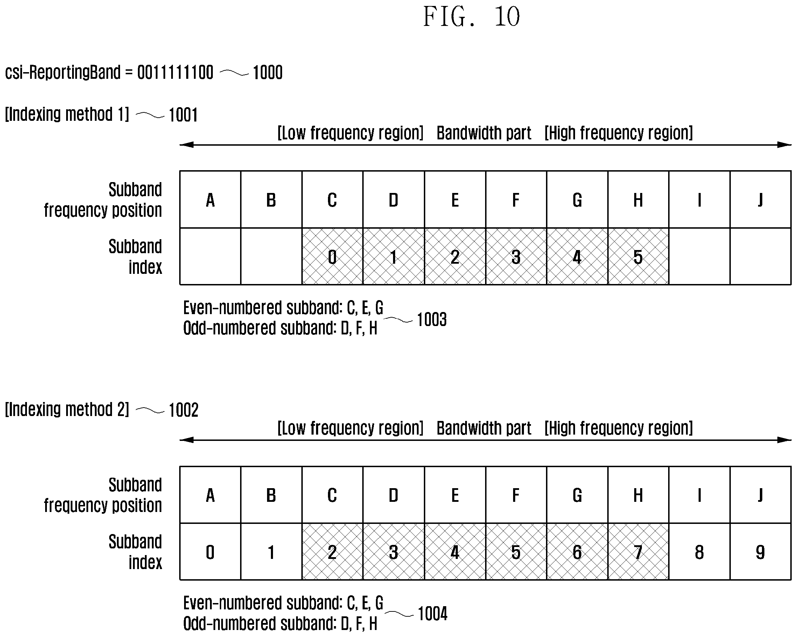

FIG. 10 illustrates another example of a method capable of deriving the same operation in different subband channel state information reporting methods according to the disclosure. In FIG. 10, the csi-Reporting bitmap may be assumed to be configured as 0011111100 (indicated by reference numeral 1000). For the bitmap, according to [Indexing method 1] (indicated by reference numeral 1001), the index of the subband is determined only based on the position in which a value of "1" is assigned, and thus the even-numbered subbands may be determined as C, E, and G, and the odd-numbered subbands may be determined as D, F, and H (indicated by reference numeral 1003). In addition, according to [Indexing method 2] (indicated by reference numeral 1002), the index of the subband may be determined based on the absolute position of a bit in the bitmap regardless of a value of "1" or "0", and thus the even-numbered subbands may be determined as C, E, and G, and the odd-numbered subbands may be determined as D, F, and H (indicated by reference numeral 1004).

In the corresponding bitmap, an even number of consecutive "0"s is configured at the rightmost bit position, and thus when the two indexing methods are used, although the even-numbered subbands of the lowest frequency may not have the same index, the lowest even-numbered subband may have the same frequency position. Therefore, according to [Indexing method 1] and [Indexing method 2], the subband indices for frequency position C are 0 and 2, respectively, but the two subband indices may be the lowest even-numbered subband indices when the UE reports the subband channel state information via the corresponding bitmap. Similarly, the subband indices for frequency position D according to [Indexing method 1] and [Indexing method 2] are 1 and 3, respectively, but the two subband indices may be the lowest odd-numbered subband indices when the UE reports the subband channel state information via the corresponding bitmap.

When the UE reports subband channel state information, since the PMI and CQI information of the even-numbered subband are generated and reported sequentially in ascending order from the lowest index for the even-numbered subbands, even if the subband indices are different, the subbands corresponding to the even-numbered and odd-numbered subband indices have the same the frequency position, and thus even if the base station and the UE use different indexing methods, they may ensure a consistent understanding of the information generated and interpretation thereof when reporting the subband channel state information.

[Bitmap configuration method 4]

A base station may not know whether the base station and a UE have the same or different understanding of a subband index determination method. Therefore, with respect to a csi-ReportingBand bitmap transmitted from the base station, the UE may expect that the bit position of "1" that appears first in the bitmap, starting from the right side of the bitmap, is configured to exist at the odd-numbered bit position, such as the first, third, fifth, etc., from the right side of the bitmap. In addition, if the base station wants to configure discontinuous subband channel state information reporting for the UE, the base station may configure an even number of consecutive "0"s at the left from the position of "1" that appears first from the rightmost side of the bitmap to be transmitted to the UE. Similarly, the UE may expect to receive an even number of consecutive "0"s at the left from the position of "1" that appears first from the rightmost side of the bitmap from the base station, for the purpose of receiving configuration of discontinuous subband channel state information reporting from the base station. Additionally, the UE does not expect to receive, from the base station, an odd number of consecutive "0"s at the left from the position of the "1" that appears first from the rightmost side of the bitmap.

Accordingly, when interpreting the csi-ReportingBand bitmap based on [Indexing method 1] and [Indexing method 2], the UE may be expect to have the same understanding of the even- and odd- numbered subbands as the base station. When the UE receives configuration of a csi-ReportingBand bitmap from the base station, the UE may expect that the even-numbered subbands have the same frequency position, and the odd-numbered subbands have the same frequency position and interprets the bitmap based on [Indexing method 1] and [Indexing method 2].

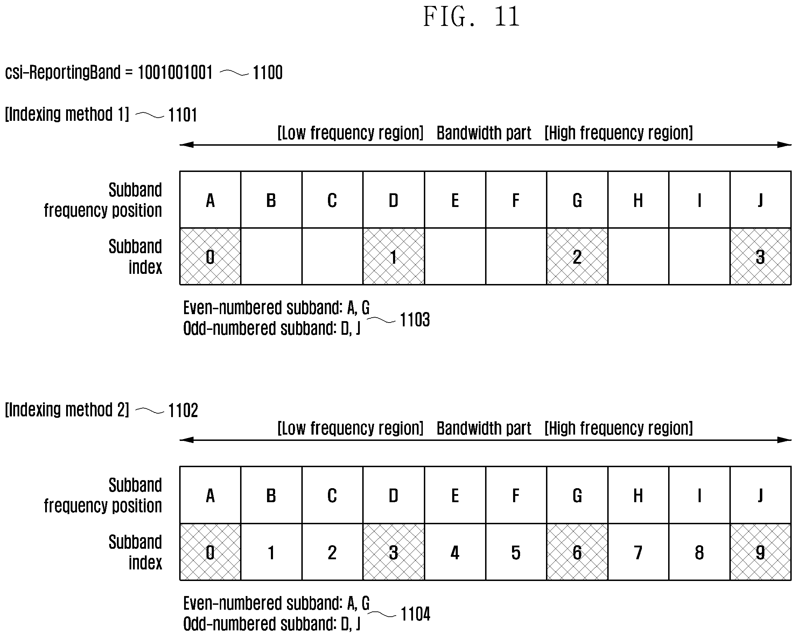

FIG. 11 illustrates another example of a method capable of deriving the same operation in different subband channel state information reporting methods according to the disclosure. In FIG. 11, the csi-Reporting bitmap may be assumed to be configured as 1001001001 (indicated by reference numeral 1100). For the corresponding bitmap, according to [Indexing method 1] (indicated by reference numeral 1201), the index of the subband is determined using only the position in which a value of "1" is assigned, and thus the even-numbered subbands may be determined as A and G, and the odd-numbered subbands may be determined as D and J (indicated by reference numeral 1103). In addition, according to [Indexing method 2] (indicated by reference numeral 1102), the index of the subband is determined based on the absolute position of a bit in the bitmap regardless of a value of "1" or "0", and thus the even-numbered subbands may be determined as A and G, the odd-numbered subbands may be determined as D and J (indicated by reference numeral 1104).

In the corresponding bitmap, the bit position of "1" that appears first from the right side of the bitmap exists in an odd-numbered bit position, such as the first, third, fifth, ... etc., from the right side of the bitmap, and thus when two indexing methods are used, although even-numbered subbands of the lowest frequency may not be configured to have the same index, subbands having the lowest even-numbered index may be configured to have the same frequency position. Therefore, according to [Indexing method 1] and [Indexing method 2], even if the subband index at frequency position A is 0 and the subband indices at frequency position G are different as 2 and 6, respectively, the same frequency position may correspond to the same even-numbered subband. Similarly, according to [Indexing method 1] and [Indexing method 2], the subband indices at frequency position D are 1 and 3, respectively, but the two subband indices may be the lowest odd-numbered subband indices when the UE reports subband channel state information via the bitmap.

As such, when the UE reports subband channel state information, since PMI and CQI information of the even-numbered subbands are sequentially generated and reported in ascending order from the lowest index for the even-numbered subbands, and PMI and CQI information of the odd-numbered subbands are generated and reported in ascending order from the lowest index for the odd-numbered subbands, even if the subband indices are different, the frequency positions of the subbands corresponding to the even-numbered and odd-numbered subband indices are the same, and thus even if the base station and the UE use different indexing methods, they may ensure a consistent understanding of the information generated and interpretation thereof when reporting the subband channel state information.

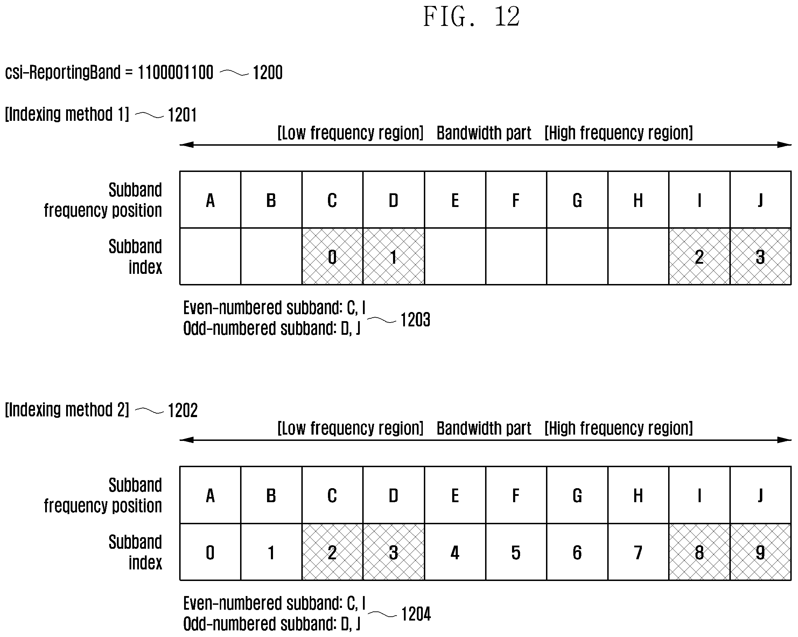

FIG. 12 illustrates another example of a method capable of deriving the same operation in different subband channel state information reporting methods according to the disclosure. In FIG. 12, the csi-Reporting bitmap may be assumed to be configured as 1100001100 (indicated by reference numeral 1200). For the corresponding bitmap, according to [Indexing method 1] (indicated by reference numeral 1201), the index of the subband is determined only based on the position in which a value of "1" is assigned, and thus the even-numbered subband may be determined as C and **I,** and the odd-numbered subband may be determined as D and J (indicated by reference numeral 1203). In addition, according to [Indexing method 2] (indicated by reference numeral 1202), the index of the subband is determined based on the absolute position of a bit in the bitmap regardless of a value of "1" or "0", and thus the even-numbered subbands may be determined as C and I, and the odd-numbered subbands may be determined as D and J (indicated by reference numeral 1204).

In this bitmap, the bit position of "1", which appears first from the right side of the bitmap, is at the third, that is, the odd-numbered bit position from the right side of the bitmap, and thus even when two indexing methods are used, although the indices of the even-numbered bit position of the lowest frequency may not be the same, the lowest even-numbered subbands may be configured to have the same frequency position. Therefore, according to [Indexing method 1] and [Indexing method 2], the subband indices for the frequency position C are different as 0 and 2, respectively, but the same frequency position may correspond to the same even-numbered subband. Similarly, according to [Indexing method 1] and [Indexing method 2], the subband indices at the frequency position D is 1 and 3, respectively, but the two subband indices may be the odd-numbered subband index of the lowest frequency when the UE reports the subband channel state information via the corresponding bitmap.

As such, when the UE reports subband channel state information, since PMI and CQI information of the even-numbered subbands are sequentially generated and reported in ascending order from the lowest index for the even-numbered subbands, and PMI and CQI information of the odd-numbered subbands are generated and reported in ascending order from the lowest index for the odd-numbered subbands, even if the subband indices are different, the frequency positions of the subbands corresponding to the even-numbered and odd-numbered subband indices are the same, and thus even if the base station and the UE use different indexing methods, they may ensure a consistent understanding of the information generated and interpretation thereof when reporting the subband channel state information.

[Bitmap determination method 5]

A UE and a base station may be assumed to determine an index of a subband in which channel state information is to be reported, based on either [Indexing method 1] or [Indexing method 2] described above.

In an example, a UE and a base station supporting 5G NR may determine an index of a subband based on either [Indexing method 1] or [Indexing method 2], regardless of which version (release) of the corresponding NR function is used.

In another example, a UE and a base station supporting 5G NR may determine an index of a subband based on either [Indexing method 1] or [Indexing method 2] depending on which version (release) of the corresponding NR function is used.

- For example, with respect to the UE and base station supporting Release 15 or 16, the index of the subband may be determined based on [Indexing method 1], and with respect to the UE and base station supporting Release 17 and later, the index of the subband may be determined based on [Indexing method 2].
- As another example, it is possible for the UE and base station supporting Release 15 or 16 to use different indexing methods, and there may be no explicit signaling of which indexing method the UE and base station are using. In this case, the base station restrictively provides csi-ReportingBand configuration information, which is higher layer signaling, to the UE based on [Bitmap determination method 1] to [Bitmap determination method 4] described above to ensure understanding between different indexing methods.

In yet another example, with respect to the UE and base station supporting Release 15 or 16, the base station may distinguish the manufacturer of a specific UE by using an implementation method and may assume that one of two indexing methods is used for each UE manufacturer. For example, when the base station may identify the manufacturer of a specific UE and the manufacturer assumes [Indexing method 1], the base station may assume that the UE determines the subband index, based on [Indexing method 1] even if the UE does not report explicit signaling to the base station about which indexing method the UE uses when determining the subband index. When all UEs connected to the base station within a specific BWP, cell, or cell group are UEs from one manufacturer, and the base station uses the same indexing method assumed by the manufacturer, the base station may operate based on the indexing method assumed by the manufacturer. Otherwise, the base station may restrictively provide the csi-ReportingBand configuration information, which is higher layer signaling, to the UE based on [Bitmap determination method 1] to [Bitmap determination method 4] described above to ensure understanding between different indexing methods.

When the base station and the UE operate based on one of the two indexing methods as described above, the following operations may be possible.

- The UE may assume that the base station and the UE determine the index of the subband based on [Indexing method 1] described above. In other words, the UE may determine the subband at the rightmost "1" position in the csi-ReportingBand bitmap configured by higher layer signaling as the subband of lowest index (i.e. subband 0), and may determine the index of the subband in ascending order by using bits with the value of "1" at the left from the rightmost bit of the bitmap.

- Additionally, the base station may assume that the UE and the base station determine the index of the subband based on [Indexing method 1] described above. In other words, the base station may determine the subband at the rightmost "1" position in the csi-ReportingBand bitmap configured for the UE via higher layer signaling as the subband of lowest index (i.e., subband 0), and may determine the index of the subband in ascending order by using bits with the value of "1" at the left from the rightmost bit of the bitmap.

- Additionally, the UE may assume that the base station and the UE determine the index of the subband based on [Indexing method 2] described above. In other words, regardless of whether the value of each bit in the csi-ReportingBand bitmap configured for the UE via higher layer signaling is "0" or "1", the UE may determine the subband of the rightmost bit position in the bitmap as the subband with lowest index (i.e., subband 0), and determine the index of the subband in ascending order by using bits with the value of "1" at the left from the rightmost bit of the bitmap.

Additionally, the UE may assume that the base station and the UE determine the index of the subband based on [Indexing method 2] described above. In other words, regardless of whether the value of each bit in the csi-ReportingBand bitmap configured for the UE via higher layer signaling is "0" or "1", the base station may determine the subband of the rightmost bit position in the bitmap as the subband with lowest index (i.e., subband 0), and determine the index of the subband in ascending order by using bits with the value of "1" at the left from the rightmost bit of the bitmap.

With respect to [Bitmap determination method 1] to [Bitmap determination method 5] described above, the UE may perform UE capability reporting to inform the base station that supporting a specific method is possible. Alternatively, the UE may perform UE capability reporting indicating that the UE is implemented using one of the two methods for [Indexing method 1] or [Indexing method 2] described above, or indicating that implementation of both methods is possible. Alternatively, when the UE reports to the base station a predetermined UE capability of Release 15 or 16 functions rather than explicit signaling for the above two indexing methods, the base station may assume that the UE supports one of [Indexing method 1] or [Indexing method 2] (e.g., it may assume that [Indexing method 1] is supported), and perform a restrictive operation using one of [Bitmap determination method 1] to [Bitmap determination method 4] described above.

Alternatively, when the UE of Release 15 or 16 implements a UE capability report that explicitly means that one or both of the two indexing methods described above are supported, by using an early implementable function, and the base station receiving the UE capability report also has a function capable of interpreting the early implementable function, the base station may identify which of the two indexing methods described above the UE uses to assign subband indices, and based on this information, the base station may support one of [Bitmap determination method 1] to [Bitmap determination method 5] for the UE. Alternatively, if the UE does not explicitly signal the two indexing methods but reports a predetermined UE capability among Release 17 functions to the base station, or if the base station may identify the version of the UE, i.e., the base station may identify the release information of the UE and the version is Release 17, the base station may assume that the UE supports one of [Indexing method 1] or [Indexing method 2] (for example, it may assume that [Indexing method 1] is supported) and perform a restrictive operation using one of the above [Bitmap determination method 1] to [Bitmap determination method 4].

Alternatively, when the UE reports explicit signaling for the above two indexing methods to the base station, the base station may assume that the UE supports one of [Indexing method 1] or [Indexing method 2] (e.g., it may assume that [Indexing method 1] is supported), and may configure additional higher layer signaling for each UE. The corresponding higher layer signaling may mean that one of a total of three cases is performed such that the UE operates in [Indexing method 1] or [Indexing method 2] when the UE reports subband channel state information, or operates based on one of [Bitmap determination method 1] to [Bitmap determination method 4] described above in a restrictive manner.

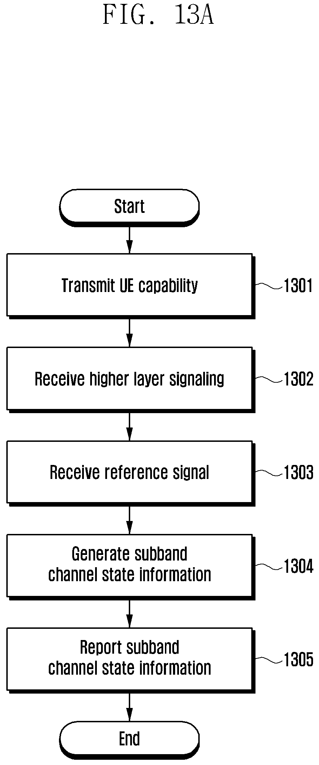

FIG. 13A illustrates an example of an operation performed by a UE according to an embodiment of the disclosure.

The UE may transmit a UE capability to a base station (operation 1301). At this time, the UE capability may follow the information described above. For example, the UE capability may express specific functions of Release 15, 16, or later versions to support 5G NR, may be a UE capability having a meaning of supporting one or both of [Indexing method 1] or [Indexing method 2] described above, and may include all of these. Thereafter, the UE may receive higher layer signaling from the base station (operation 1302). At this time, the UE may receive csi-ReportingBand, which is higher layer signaling for reporting subband channel state information, and the csi-ReportingBand may be generated by the base station based on [Bitmap determination method 1] to [Bitmap determination method 5] described above. Thereafter, the UE may receive a reference signal from the base station (operation 1303), and may generate subband channel state information based on the channel state information measured using the reference signal (operation 1304). In this case, the UE may generate channel state information for the subband indicated by the corresponding csi-ReportingBand bitmap by assuming one of [Indexing method 1] or [Indexing method 2] the above-described. Thereafter, the UE may report the subband channel state information to the base station (operation 1305). At least one of the operations described above may be skipped, other operations may be added, or the order thereof may be changed, to perform the disclosure.

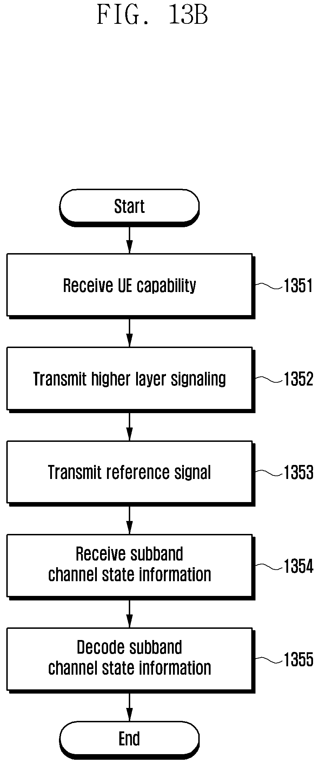

FIG. 13B illustrates an example of an operation performed by a base station according to an embodiment of the disclosure.

The base station may receive a UE capability transmitted by a UE (operation 1351). At this time, the UE capability may follow the information described above. For example, the UE capability may express specific functions of Release 15, 16, or later versions to support 5G NR, may be a UE capability having a meaning of supporting one or both of [Indexing method 1] or [Indexing method 2] described above, and may include all of these. Thereafter, the base station may transmit higher layer signaling to the UE (operation 1352). At this time, the base station may transmit, to the UE, csi-ReportingBand, which is higher layer signaling for reporting subband channel state information, and the csi-ReportingBand may be generated by the base station based on [Bitmap determination method 1] to [Bitmap determination method 5] described above. Thereafter, the base station may transmit a reference signal to the UE (operation 1353), and the base station may receive subband channel state information which has been generated by the UE by receiving a corresponding reference signal (operation 1354). In this case, the base station may decrypt and decode the subband channel state information having been received from the UE, and may assume to apply one of [Indexing method 1] or [Indexing method 2] described above to interpret the subband channel state information (operation 1355). In other words, the base station may identify a subband indicating that the received subband channel state information is related to, based on indexing method 1 or indexing method 2 described above. At least one of the operations described above may be skipped, other operations may be added, or the order thereof may be changed, to perform the disclosure.

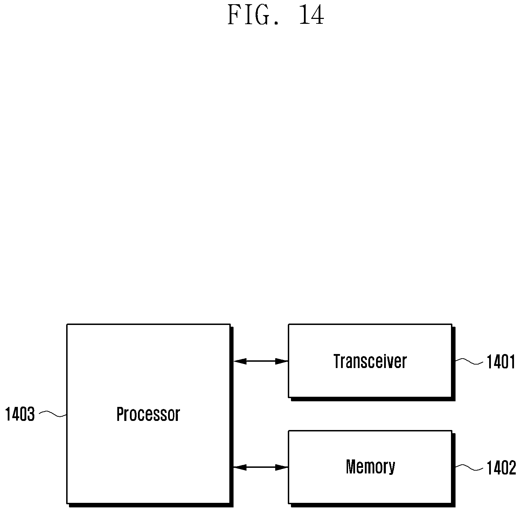

FIG. 14 is a block diagram illustrating a structure of a UE according to an embodiment of the disclosure.

Referring to FIG. 14, the UE may include a transceiver 1401, a memory 1402, and a processor 1403. Components of the UE are not limited to the above-described example. For example, the UE may include a larger or smaller number of components than the above-described components. Furthermore, all or at least some of the transceiver 1401, the memory 1402, and the processor 1403 may be implemented in the form of a single chip.

In an embodiment, the transceiver 1401 may transmit/receive signals with the base station. The above-mentioned signals may include control information and data. To this end, the transceiver 1401 may include an RF transmitter configured to up-convert and amplify the frequency of transmitted signals, an RF receiver configured to low-noise-amplify received signals and down-convert the frequency thereof, and the like. In addition, the transceiver 1401 may receive signals through a radio channel, output the same to the processor 1403, and transmit signals output from the processor 1403 through the radio channel.

In an embodiment, the memory 1402 may store programs and data necessary for operations of the UE. In addition, the memory 1402 may store control information or data included in signals transmitted/received by the UE. The memory 1402 may include storage media such as a ROM, a RAM, a hard disk, a CD-ROM, and a DVD, or a combination of storage media. In addition, the memory 1402 may include multiple memories. According to an embodiment, the memory 1402 may store a program for performing operations for channel state information measurement and reporting of the UE.

In an embodiment, the processor 1403 may control a series of processes such that the UE can operate according to the above-described embodiments of the disclosure. In an embodiment, the processor 1403 may execute the program stored in the memory 1402 to receive configuration information for channel state information measurement from the base station and, based on the configuration information, control channel state information measurement and reporting operations.

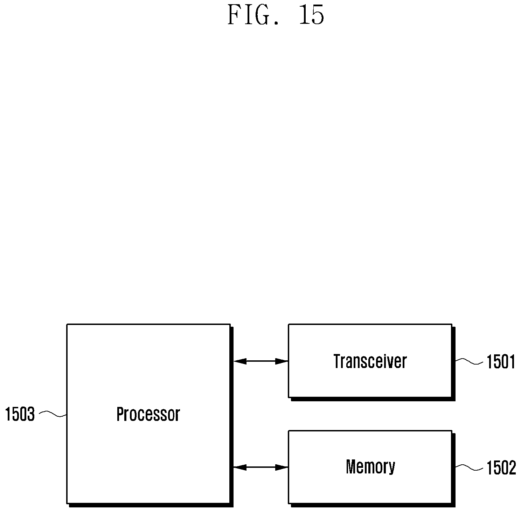

FIG. 15 is a block diagram illustrating a structure of a base station according to an embodiment of the disclosure.

Referring to FIG. 15, the base station may include a transceiver 1501, a memory 1502, and a processor 1503. However, components of the base station are not limited to the above-described example. For example, the base station may include a larger or smaller number of components than the above-described components. Furthermore, the transceiver 1501, the memory 1502, and the processor 1503 may be implemented in the form of a single chip.

In an embodiment, the transceiver 1501 may transmit/receive signals with the UE. The signals may include control information and data. To this end, the transceiver 1501 may include an RF transmitter configured to up-convert and amplify the frequency of transmitted signals, an RF receiver configured to low-noise-amplify received signals and down-convert the frequency thereof, and the like. In addition, the transceiver 1501 may receive signals through a radio channel, output the same to the processor 1503, and transmit signals output from the processor 1503 through the radio channel.

In an embodiment, the memory 1502 may store programs and data necessary for operations of the base station. In addition, the memory 1502 may store control information or data included in signals transmitted/received by the base station. The memory 1502 may include storage media such as a ROM, a RAM, a hard disk, a CD-ROM, and a DVD, or a combination of storage media. In addition, the memory 1502 may include multiple memories. According to an embodiment, the memory 1502 may store a program for performing operations for channel state information reporting of the UE.

In an embodiment, the processor 1503 may control a series of processes such that the base station can operate according to the above-described embodiments. In an embodiment, the processor 1503 may execute the program stored in the memory 1502 to transmit configuration information for channel state information measurement to the UE and control channel state information reception operations.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, or NR systems.

**Claims**

1. A method performed by a terminal in a communication system, the method comprising:

   receiving, from a base station, a bitmap indicating a subband for channel state information (CSI) reporting;
   generating CSI, based on one or more subbands for the CSI reporting, identified based on the bitmap; and
   transmitting the CSI to the base station,
   wherein the one or more subbands are identified using a first method or a second method for identifying the one or more subbands by interpreting the bitmap.

2. The method of claim 1, wherein each bit of the bitmap indicates whether a subband including a specific number of physical resource blocks (PRBs) corresponding to each bit is considered for the CSI reporting,

   wherein the first method is a method of assigning subband indices to subbands starting from a low frequency band corresponding to each bit configured as "1" in the bitmap, and the second method is a method of assigning subband indices to all subbands starting from the lowest frequency band, and
wherein, even in case that the bitmap is interpreted according to the first method or the second method, the bitmap indicates the same frequency band corresponding to oddnumbered subbands and the same frequency band corresponding to even-numbered subbands.

3. The method of claim 1, further comprising transmitting, to the base station, terminal capability information related to a subband indexing method for the CSI reporting,
wherein the terminal capability information is related to the first method or the second method for identifying the one or more subbands, based on the bitmap, or a release version of the terminal.

4. The method of claim 1, wherein, in case that the terminal corresponds to Release 17, the one or more subbands are identified by interpreting the bitmap using the first method.

5. A method performed by a base station in a communication system, the method comprising:

Transmitting, to aa terminal, a bitmap indicating a subband for channel state information (CSI) reporting; and
receiving CSI from the terminal,
wherein the CSI is based on one or more subbands for the CSI reporting indicated by the bitmap, and
wherein the one or more subbands are identified using a first method or a second method for identifying the one or more subbands by interpreting the bitmap.

6. The method of claim 5, wherein each bit of the bitmap indicates whether a subband including a specific number of physical resource blocks (PRBs) corresponding to each bit is considered for the CSI reporting,

wherein the first method is a method of assigning subband indices to subbands starting from a low frequency band corresponding to each bit configured as "1" in the bitmap, and the second method is a method of assigning subband indices to all subbands starting from the lowest frequency band, and
wherein, even in case that the bitmap is interpreted according to the first method or the second method, the bitmap indicates the same frequency band corresponding to oddnumbered subbands and the same frequency band corresponding to even-numbered subbands.

7. The method of claim 5, further comprising receiving, from the terminal, terminal capability information related to a subband indexing method for the CSI reporting,
wherein the terminal capability information is related to the first method or the second method for identifying the one or more subbands, based on the bitmap, or a release version of the terminal.

8. The method of claim 5, wherein, in case that the terminal corresponds to Release 17, the bitmap is generated to indicate the one or more subbands by using the first method.

9. A terminal in a communication system, the terminal comprising:

a transceiver; and
a controller configured to perform control to receive, from a base station, a bitmap indicating a subband for channel state information (CSI) reporting, generate CSI, based on one or more subbands for the CSI reporting identified based on the bitmap, and transmit the CSI to the base station,
wherein the one or more subbands are identified using a first method or a second method for identifying the one or more subbands by interpreting the bitmap.

10. The terminal of claim 9, wherein each bit of the bitmap indicates whether a subband including a specific number of physical resource blocks (PRBs) corresponding to each bit is considered for the CSI reporting,

wherein the first method is a method of assigning subband indices to subbands starting from a low frequency band corresponding to each bit configured as 1 in the bitmap, and the second method is a method of assigning subband indices to all subbands starting from the lowest frequency band, and
wherein, even in case that the bitmap is interpreted according to the first method or the second method, the bitmap indicates the same frequency band corresponding to oddnumbered subbands and the same frequency band corresponding to even-numbered subbands.

11. The terminal of claim 9, wherein the controller is further configured to perform control to transmit, to the base station, terminal capability information related to a subband indexing method for the CSI reporting,
wherein the terminal capability information is related to the first method or the second method for identifying the one or more subbands, based on the bitmap, or a release version of the terminal.

12. The terminal of claim 9, wherein, in case that the terminal corresponds to Release 17, the one or more subbands are identified by interpreting the bitmap using the first method.

13. A base station in a communication system, the base station comprising:

a transceiver; and
a controller configured to perform control to transmit, to a terminal, a bitmap indicating a subband for channel state information (CSI) reporting, and receive CSI from the terminal,
wherein the CSI is based on one or more subbands for the CSI reporting indicated by the bitmap, and
wherein the one or more subbands are identified using a first method or a second method for identifying the one or more subbands by interpreting the bitmap.

14. The base station of claim 13, wherein each bit of the bitmap indicates whether a subband including a specific number of physical resource blocks (PRBs) corresponding to bit is considered for the CSI reporting,

wherein the first method is a method of assigning subband indices to subbands starting from a low frequency band corresponding to each bit configured as 1 in the bitmap, and the second method is a method of assigning subband indices to all subbands starting from the lowest frequency band, and
wherein, even in case that the bitmap is interpreted according to the first method or the second method, the bitmap indicates the same frequency band corresponding to oddnumbered subbands and the same frequency band corresponding to even-numbered subbands.

15. The base station of claim 13, wherein the controller is further configured to perform control to receive, from the terminal, terminal capability information related to a subband indexing method for the CSI reporting,
wherein the terminal capability information is related to the first method or the second method for identifying the one or more subbands, based on the bitmap, or a release version of the terminal.

# FIG. 1

One subframe (110)

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

$k = 0$

Frequency

$\bar{l} = 0$

$\bar{l} = 14 \cdot 2^{\mu} - 1$

Time

# FIG. 2

1 frame (200)

1 subframe (201)

μ=0 (204): | 0 | 1 | 2 | 3 | 4 | 5 | 6 | 7 | 8 | 9 |

slot (202)

μ=1 (205): | 0 | 1 | 2 | 3 | 4 | 5 | 6 | 7 | 8 | 9 | 10 | 11 | 12 | 13 | 14 | 15 | 16 | 17 | 18 | 19 |

slot (203)

EP 4 586 517 A1

# FIG. 3

BWP#1
(301)

BWP#2
(302)

UE bandwidth
(300)

Frequency

# FIG. 4

Duration [404]

Frequency resource [403]

UE bandwidth part [410]

slot [420]

Frequency

Time

Control resource set #1 [401]

Control resource set #2 [402]

FIG. 5

1 symbol
(501)

1 PRB (502)

DMRS
(505)

REG
(503)

CCE
(504)

## FIG. 6

# FIG. 7

csi-ReportingBand = 1011101110 ∼ 700

[Indexing method 1] ∼ 701

[Low frequency region]   Bandwidth part   [High frequency region]
←——————————————————————————————————————————→

| Subband frequency position | A | B | C | D | E | F | G | H | I | J |
|---|---|---|---|---|---|---|---|---|---|---|
| Subband index | | 0 | 1 | 2 | | 3 | 4 | 5 | | 6 |

Even-numbered subband: B, D, G, J
Odd-numbered subband: C, F, H   ∼ 703

[Indexing method 2] ∼ 702

[Low frequency region]   Bandwidth part   [High frequency region]
←——————————————————————————————————————————→

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: C, G   ∼ 704
Odd-numbered subband: B, D, F, H, J

EP 4 586 517 A1

# FIG. 8

csi-ReportingBand = 1111111111 ~ 800

[Indexing method 1] ~ 801

[Low frequency region]   Bandwidth part   [High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: A, C, E, G, I ~ 803
Odd-numbered subband: B, D, F, H, J

[Indexing method 2] ~ 802

[Low frequency region]   Bandwidth part   [High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: A, C, E, G, I ~ 804
Odd-numbered subband: B, D, F, H, J

# FIG. 9

csi-ReportingBand = 0000011111 ~ 900

[Indexing method 1] ~ 901

[Low frequency region]   Bandwidth part   [High frequency region]

| Subband frequency position | A | B | C | D | E | F | G | H | I | J |
|---|---|---|---|---|---|---|---|---|---|---|
| Subband index | 0 | 1 | 2 | 3 | 4 | | | | | |

Even-numbered subband: A, C, E
Odd-numbered subband: B, D ~ 903

[Indexing method 2] ~ 902

[Low frequency region]   Bandwidth part   [High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: A, C, E
Odd-numbered subband: B, D ~ 904

EP 4 586 517 A1

# FIG. 10

csi-ReportingBand = 0011111100 ~~ 1000

[Indexing method 1] ~~ 1001

[Low frequency region]   Bandwidth part   [High frequency region]

| Subband frequency position | A | B | C | D | E | F | G | H | I | J |
|---|---|---|---|---|---|---|---|---|---|---|
| Subband index | | | 0 | 1 | 2 | 3 | 4 | 5 | | |

Even-numbered subband: C, E, G
Odd-numbered subband: D, F, H  ~~ 1003

[Indexing method 2] ~~ 1002

[Low frequency region]   Bandwidth part   [High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: C, E, G
Odd-numbered subband: D, F, H  ~~ 1004

EP 4 586 517 A1

# FIG. 11

csi-ReportingBand = 1001001001 ~1100

[Indexing method 1] ~1101

[Low frequency region]　Bandwidth part　[High frequency region]

| Subband frequency position | A | B | C | D | E | F | G | H | I | J |
|---|---|---|---|---|---|---|---|---|---|---|
| Subband index | 0 | | | 1 | | | 2 | | | 3 |

Even-numbered subband: A, G
Odd-numbered subband: D, J ~1103

[Indexing method 2] ~1102

[Low frequency region]　Bandwidth part　[High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: A, G
Odd-numbered subband: D, J ~1104

EP 4 586 517 A1

# FIG. 12

csi-ReportingBand = 1100001100 ～ 1200

[Indexing method 1] ～ 1201

[Low frequency region]　Bandwidth part　[High frequency region]

| Subband frequency position | A | B | C | D | E | F | G | H | I | J |
|---|---|---|---|---|---|---|---|---|---|---|
| Subband index | | | 0 | 1 | | | | | 2 | 3 |

Even-numbered subband: C, I
Odd-numbered subband: D, J ～ 1203

[Indexing method 2] ～ 1202

[Low frequency region]　Bandwidth part　[High frequency region]

| Subband frequency position | A | B | C | D | E | F | G | H | I | J |
|---|---|---|---|---|---|---|---|---|---|---|
| Subband index | 0 | 1 | 2 | 3 | 4 | 5 | 6 | 7 | 8 | 9 |

Even-numbered subband: C, I
Odd-numbered subband: D, J ～ 1204

EP 4 586 517 A1

# FIG. 13A

```
        ┌─────────────┐
        │    Start     │
        └─────────────┘
               │
               ▼
┌──────────────────────────────┐
│      Transmit UE capability   │────1301
└──────────────────────────────┘
               │
               ▼
┌──────────────────────────────┐
│    Receive higher layer signaling │────1302
└──────────────────────────────┘
               │
               ▼
┌──────────────────────────────┐
│      Receive reference signal  │────1303
└──────────────────────────────┘
               │
               ▼
┌──────────────────────────────┐
│         Generate subband       │────1304
│    channel state information   │
└──────────────────────────────┘
               │
               ▼
┌──────────────────────────────┐
│          Report subband        │────1305
│    channel state information   │
└──────────────────────────────┘
               │
               ▼
        ┌─────────────┐
        │     End      │
        └─────────────┘
```

# FIG. 13B

Start

Receive UE capability ~1351

Transmit higher layer signaling ~1352

Transmit reference signal ~1353

Receive subband
channel state information ~1354

Decode subband
channel state information ~1355

End

FIG. 14

1403 — Processor

Transceiver — 1401

Memory — 1402

# FIG. 15

```
1503 ——  Processor        <——>  Transceiver  ——1501

                          <——>  Memory       ——1502
```

## INTERNATIONAL SEARCH REPORT

International application No.

**PCT/KR2023/015569**

| A. | CLASSIFICATION OF SUBJECT MATTER |
|---|---|

**H04B 7/06**(2006.01)i; **H04W 72/04**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04L 5/00(2006.01); H04W 72/04(2009.01); H04W 72/12(2009.01); H04W 88/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information), 부분대역(subband), 비트맵(bitmap), 부분대역 인덱스(subband index), 할당(allocation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br><br>A | WO 2022-086268 A1 (LG ELECTRONICS INC.) 28 April 2022 (2022-04-28)<br>See paragraphs [0363] and [0370]. | 1,3-5,7-9,11-13,15<br><br>2,6,10,14 |
| Y | KR 10-2022-0004773 A (LG ELECTRONICS INC.) 11 January 2022 (2022-01-11)<br>See paragraphs [0363], [0369]-[0371] and [0384]. | 1,3-5,7-9,11-13,15 |
| Y | WO 2021-202357 A1 (CONVIDA WIRELESS, LLC) 07 October 2021 (2021-10-07)<br>See paragraphs [0050], [0074] and [0076]. | 3-4,7-8,11-12,15 |
| A | US 2021-0377938 A1 (QUALCOMM INCORPORATED) 02 December 2021 (2021-12-02)<br>See paragraphs [0084]-[0107]; and figures 9-11. | 1-15 |
| A | KR 10-2012-0073221 A (SAMSUNG ELECTRONICS CO., LTD.) 04 July 2012 (2012-07-04)<br>See paragraphs [0058]-[0126]; and figures 4-16. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015569**

| Patent document cited in search report | | | Publication date (day/month/year) | Patent family member(s) | | | Publication date (day/month/year) |
|---|---|---|---|---|---|---|---|
| WO | 2022-086268 | A1 | 28 April 2022 | KR | 10-2023-0093258 | A | 27 June 2023 |
| KR | 10-2022-0004773 | A | 11 January 2022 | CN | 114557097 | A | 27 May 2022 |
| | | | | EP | 3996445 | A1 | 11 May 2022 |
| | | | | US | 11523416 | B2 | 06 December 2022 |
| | | | | US | 11751194 | B2 | 05 September 2023 |
| | | | | US | 2022-0159686 | A1 | 19 May 2022 |
| | | | | US | 2023-0068567 | A1 | 02 March 2023 |
| | | | | WO | 2021-080314 | A1 | 29 April 2021 |
| WO | 2021-202357 | A1 | 07 October 2021 | | None | | |
| US | 2021-0377938 | A1 | 02 December 2021 | CN | 115398850 | A | 25 November 2022 |
| | | | | EP | 4158834 | A1 | 05 April 2023 |
| | | | | TW | 202147902 | A | 16 December 2021 |
| | | | | WO | 2021-242931 | A1 | 02 December 2021 |
| KR | 10-2012-0073221 | A | 04 July 2012 | CN | 102484793 | A | 30 May 2012 |
| | | | | CN | 102484793 | B | 08 March 2017 |
| | | | | EP | 2471294 | A2 | 04 July 2012 |
| | | | | EP | 2471294 | B1 | 17 November 2021 |
| | | | | JP | 2013-503546 | A | 31 January 2013 |
| | | | | JP | 5665148 | B2 | 04 February 2015 |
| | | | | KR | 10-1707021 | B1 | 15 February 2017 |
| | | | | US | 2011-0053627 | A1 | 03 March 2011 |
| | | | | US | 2013-0250884 | A1 | 26 September 2013 |
| | | | | US | 9510345 | B2 | 29 November 2016 |
| | | | | WO | 2011-025277 | A2 | 03 March 2011 |
| | | | | WO | 2011-025277 | A3 | 04 August 2011 |

Form PCT/ISA/210 (patent family annex) (July 2022)